# EUROPÄISCHE PATENTSCHRIFT

(11) **EP 4 140 655 B1**
(45) Veröffentlichungstag und Bekanntmachung des Hinweises auf die Patenterteilung: **25.12.2024**
(21) Anmeldenummer: 21290054.2
(22) Anmeldetag: 31.08.2021
(51) Int. Cl.: B25F 5/00

(54) **HANDWERKERAUSSTATTUNG AUFWEISEND EINEN TOKEN ZUM BENUTZERBEZOGENEN STEUERN EINES HANDWERKERGERÄTS**
CRAFTSMAN EQUIPMENT HAVING A TOKEN FOR USER-RELATED CONTROL OF A HANDHELD DEVICE
MATÉRIEL D'ARTISAN AYANT UN JETON DESTINÉ À LA COMMANDE PAR UN UTILISATEUR D'UN OUTIL

(43) Veröffentlichungstag der Anmeldung: 01.03.2023
(73) Patentinhaber: Adolf Würth GmbH & Co. KG, 74653 Künzelsau (DE); Würth International AG, 7000 Chur (CH)
(72) Erfinder: Rosskamp, Heiko, 73099 Adelberg (DE); Marquette, Adrien, 74523 Schwäbisch Hall (DE); Aschoff, Louisa, 74632 Neuenstein (DE)
(74) Vertreter: Dilg, Andreas

(56) Entgegenhaltungen:
- EP-A1- 1 720 122
- WO-A1-2006/021047
- DE-A1- 10 248 389
- US-A1- 2017 177 894

## Beschreibung

Die Erfindung betrifft einen Token zum benutzerbezogenen Steuern eines Handwerkergeräts, eine Handwerkerausstattung und ein Verfahren zum benutzerbezogenen Steuern eines Handwerkergeräts mittels eines Token.

Herkömmliche Handgeräte werden von einem Benutzer direkt gesteuert. Beispielsweise wird eine Bohrmaschine dadurch gesteuert, dass ein Benutzer einen geeigneten Bohrer in die Bohrmaschine einsetzt und dann eine Betätigungstaste der Bohrmaschine betätigt. Wenn ein Benutzer ohne Spezialkenntnisse mittels eines solchen Handgeräts eine delikate Handwerkaufgabe ausführt, kann es zu einer Fehlbedienung, einem unerwünschten Ergebnis und einer Gefährdung der Betriebssicherheit kommen.

DE 10258900 A1 offenbart einen Akkuschrauber zum Festschrauben von Schraubkomponenten, mit einem Schraubermotor, der von einer autarken, am Akkuschrauber angeordneten Spannungsversorgung mit elektrischer Spannung versorgt wird, mindestens drei Messeinrichtungen, die zum Überwachen von Schraubparametern während des Einschraubvorgangs vorgesehen sind, nämlich einem Drehmomentsensor, mit dem das vom Schraubermotor erzeugte Anzugsdrehmoment messbar ist, einem Drehwinkelsensor, mit dem, ausgehend von einer vorgegebenen Messstellung, der aktuelle Einschraubwinkel messbar ist, und einem Stromsensor, mit dem der Antriebsstrom des Schraubermotors messbar ist. Ferner ist eine Überwachungselektronik vorgesehen, welche den Schraubermotor abschaltet, wenn gleichzeitig das Anzugsdrehmoment, der Einschraubwinkel und der Antriebsstrom jeweils innerhalb eines vorgegebenen, zugeordneten Soll-Parameter-Fensters liegen. WO2006/021047 offenbart einen Token aufweisend einen Prozessor und US2017/177894 offenbart den Oberbegriff des Anspruchs 1.

Insbesondere bei schwierigen oder unüblichen Bearbeitungsaufgaben mittels eines Handgeräts geraten herkömmliche Handgeräte an ihre Grenzen.

Es ist eine Aufgabe der vorliegenden Erfindung, einen Betrieb eines Handgeräts in einfacher, sicherer und fehlerrobuster Weise zu ermöglichen.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß der Erfindung ist eine Handwerkerausstattung bereitgestellt gemäß Anspruch 1.

Gemäß einem weiteren Ausführungsbeispiel der Erfindung ist ein Verfahren zum benutzerbezogenen Steuern des Handwerkergeräts mittels eines Token mit den Merkmalen gemäß einem der Ansprüche 1 bis 13 bereitgestellt, wobei das Verfahren ein Identifizieren eines Benutzers des Token, ein Auffinden eines personalisierten Berechtigungsprofils des Benutzers des Token, und, bei Koppeln des Token mit dem Handwerkergerät, ein Zulassen, Einstellen und/oder Unterbinden einer Benutzung des Handwerkergeräts durch den Benutzer basierend auf dem personalisierten Berechtigungsprofil aufweist.

Im Rahmen der vorliegenden Anmeldung kann unter einem "Token" insbesondere eine Erkennungsmarke verstanden werden, die eine Funktionskopplung zwischen dem Token und einem Handwerkergerät ausbilden kann. Eine solche Erkennungsmarke kann in einem gekoppelten System zum Einsatz kommen, welches den Token, ein damit mechanisch gekoppeltes Handwerkergerät und optional ein oder weitere Geräte oder Knoten umfassen kann. Insbesondere kann ein Token eine Hardwarekomponente zur Identifizierung und/oder Authentifizierung eines Benutzers sein, dem der Token zugeordnet sein kann. Ein Token kann ein elektronischer Token sein und zum Beispiel eine prozessorbezogene Steuer-, Überwachungs- und/oder Kommunikationsfunktion bereitstellen.

Im Rahmen der vorliegenden Anmeldung kann unter einem "Handwerkergerät" insbesondere eine Vorrichtung verstanden werden, die von einem Handwerker während einer handwerklichen Tätigkeit genutzt wird. Hierbei kann es sich insbesondere um ein elektrisches Handgerät (wie zum Beispiel ein Akku-Schrauber), ein (insbesondere nichtelektrisches) Werkzeug (zum Beispiel ein Hammer, eine Zange, eine Feile, ein Schraubendreher oder ein Bohrer) oder einen Werkzeugsatz mit mehreren Werkzeugen oder Werkzeugelementen (zum Beispiel eine Bohrerbox mit Bohrern oder eine Bitbox mit Bits), ein Bevorratungssystem (zum Beispiel ein Werkzeugkoffer), Verbrauchsgut (zum Beispiel Bolzenanker oder eine Schachtel mit Schrauben), und/oder ein Fahrzeug (zum Beispiel ein Kraftfahrzeug, in dem ein Handwerker seine Ausrüstung zu einem Einsatzort verbringen kann, ein Gabelstapler oder ein Werkzeugwagen) und/oder um eine sonstige Handwerker-Gerätschaft (zum Beispiel eine Leiter) handeln. Ein Handwerkergerät kann auch ein Akku-Block oder ein Adapter zwischen einem Akku-Block und einer Bearbeitungseinrichtung (zum Beispiel einem Bohr-Modul einer Bohrmaschine) sein. Beispielsweise kann ein Token in einen solchen Akku-Block oder einen solchen Adapter eingesteckt werden.

Im Rahmen der vorliegenden Anmeldung kann unter einem "Handgerät" insbesondere eine portable Vorrichtung verstanden werden, die von einem Benutzer händisch betätigt und getragen werden kann und mit dem eine Handwerkeraufgabe erledigt werden kann, zum Beispiel eine Bearbeitung eines Untergrunds. Vorteilhaft kann es sich bei dem Handgerät um ein elektrisches Handgerät handeln, das mittels einer elektrisch erzeugten Antriebskraft betrieben werden kann. Ein solches elektrisches Handgerät kann mittels elektrischer Steuersignale - insbesondere bereitgestellt mittels eines Token - gesteuert werden. Insbesondere kann mittels eines Handgeräts und durch Aufbringen einer Antriebskraft in Form einer Längskraft und/oder eines Drehmoments ein Loch in einem Untergrund gebohrt werden und/oder kann eine Antriebskraft in Form einer Längskraft und/oder eines Drehmoments auf ein in einem Untergrund zu setzendes Befestigungselement aufgebracht werden. Zum Beispiel kann das Handgerät zum Drehantreiben einer Bearbeitungseinrichtung und somit eines Bohrers und/oder eines Befestigungselements ausgebildet sein. Beispiele für elektrische oder motorische Handgeräte sind ein Akkuschrauber, ein Akku-Bohrschrauber, ein Drehschrauber, ein Impulsschrauber, ein Ratschenschrauber, eine Bohrmaschine, ein Schlagschrauber (insbesondere ein Akku-Schlagschrauber) und ein Hammerbohrer.

Im Rahmen der vorliegenden Anmeldung kann unter einer "Handwerkerausstattung" insbesondere ein Satz mit einer Vielzahl von Handwerkergeräten verstanden werden, die ein Handwerker zur Erledigung von Handwerksaufgaben in Kombination verwendet. Beispielsweise kann eine Handwerkerausstattung mindestens zehn, insbesondere mindestens hundert, Handwerkergeräte beinhalten.

Im Rahmen dieser Anmeldung kann unter dem Begriff "Prozessor" insbesondere eine elektronische Entität verstanden werden, die ein Rechenwerk und/oder ein Steuerwerk enthalten kann und/oder zur Datenverarbeitung ausgebildet sein kann. Insbesondere kann ein solcher Prozessor auf ein mit dem Token mechanisch gekoppeltes Handwerkergerät steuernd einwirken und dadurch einen Betrieb oder eine Betriebsweise des Handwerkergeräts (insbesondere ein Handgerät) einstellen. Insbesondere kann der Prozessor die Einstellung des Betriebs bzw. der Betriebsweise des Handwerkergeräts oder eines Teils davon steuern, insbesondere basierend auf einem Benutzerprofil eines Benutzers des Token. Die Steuerlogik zwischen Token und Handwerkergerät und/oder zwischen Token und einem anderen Knoten (insbesondere einem weiteren Knoten oder einer zentralen Steuereinrichtung) kann zum Beispiel entsprechend einer Master-Slave-Architektur oder entsprechend einer Peer-to-Peer-Architektur erfolgen. Der Prozessor des Token kann alternativ oder ergänzend andere Funktionen übernehmen, zum Beispiel Sensorsignale eines Sensors des Token auswerten, eine Kommunikation mit einem anderen Knoten über ein Kommunikationsnetzwerks steuern, etc. Ein Prozessor kann zum Beispiel durch ein Prozessor-Bauteil, eine Mehrzahl von Prozessor-Bauteilen oder einen Teil eines Prozessor-Bauteils realisiert sein.

Im Rahmen der vorliegenden Anmeldung kann unter einem "benutzerbezogenen Steuern eines Handwerkergeräts" insbesondere ein Steuern eines Handwerkergeräts verstanden werden, das spezifische Besonderheiten eines Benutzers des Handwerkergeräts berücksichtigt oder diese spezifischen Besonderheiten des Benutzers zur Grundlage der Steuerung macht. Insbesondere können in die Steuerlogik zum Steuern eines Handwerkergeräts körperliche und/oder biologische Eigenschaften und/oder bestehende und/oder fehlende Fähigkeiten und/oder Berechtigungen eines Benutzers eingehen.

Im Rahmen der vorliegenden Anmeldung kann unter einer "Identifizierungseinrichtung zum Identifizieren eines Benutzers des Tokens" insbesondere eine Entität oder ein Funktionsblock des Token verstanden werden, die oder der Informationen zum Feststellen der Identität des Benutzers des Token liefert. Eine Identifizierungseinrichtung kann die Identifizierung eines Benutzers zum Beispiel unter Verwendung von für eine Benutzeridentität indikativen Sensordaten (wie zum Beispiel Sensordaten eines Fingerprintsensors) und/oder durch eine entsprechende Benutzereingabe (zum Beispiel Eingabe einer Benutzerkennung, optional in Kombination mit einem Kennwort) durchführen. Im Rahmen der Identifizierung eines Benutzers kann die Identifizierungseinrichtung insbesondere einen Abgleich zwischen ermittelten Sensordaten (zum Beispiel Fingerabdruck-Ist-Daten) und vorbestimmten Referenzdaten (zum Beispiel Fingerabdruck-Soll-Daten) durchführen. Es ist auch möglich, eine Identifizierung mittels eines Transponders durchzuführen, beispielsweise mittels eines NFC (near field communication)-Transponders in einem Mobilfunkgerät oder mittels eines RFID (radio frequency identification tag)-Transponders eines Nutzers (beispielsweise in einem Geräteschlüssel).

Im Rahmen der vorliegenden Anmeldung kann unter einem "personalisierten Berechtigungsprofil eines Benutzers in Bezug auf ein Handwerkergerät" insbesondere ein spezifisch auf einen Benutzer bezogener Datensatz verstanden werden, der diesem Benutzer im Rahmen der Verwendung und/oder der Verwaltung eines bestimmten von Handwerkergeräten einer Handwerkerausstattung spezifische Nutzungsrechte (zum Beispiel Recht, ein Handgerät zu benutzen, wenn der Benutzer eine entsprechende Einweisung erhalten hat oder einen entsprechenden Führerschein besitzt), Nutzungsbeschränkungen (zum Beispiel Recht, nur ein Handgerät zu benutzen, das ein bestimmtes Maximalgewicht nicht überschreitet, oder wenn der Benutzer zugehörige Arbeitsschutzausrüstung trägt) und/oder Nutzungsverbote (zum Beispiel Verbot, ein Handgerät zu benutzen, wenn der Benutzer keine entsprechende Einweisung erhalten hat oder einen entsprechenden Führerschein nicht besitzt) zuweist. Hierbei kann in dem Berechtigungsprofil eine spezifische Zuordnung von Berechtigungen, Berechtigungsbeschränkungen und/oder oder Berechtigungsverboten zu speziellen Handwerkergeräten vorgenommen sein.

Im Rahmen der vorliegenden Anmeldung kann unter "Informationen, die für ein personalisiertes Berechtigungsprofil des Benutzers in Bezug auf das Handwerkergerät indikativ sind" insbesondere ein Datensatz an einem Token verstanden werden, der dem Benutzer für ein oder mehrere bestimmte Handwerkergeräte Benutzungsrechte, Benutzungsbeschränkungen und/oder Benutzungsverbote zuweist.

Im Rahmen der vorliegenden Anmeldung kann unter "Informationen, die Zugang zu einem personalisierten Berechtigungsprofil des Benutzers in Bezug auf das Handwerkergerät gewähren" insbesondere Zugangsdaten verstanden werden, die einem Benutzer eine Zugriffsmöglichkeit auf einen Datensatz gewähren, der dem Benutzer für ein oder mehrere bestimmte Handwerkergeräte Benutzungsrechte, Benutzungsbeschränkungen und/oder Benutzungsverbote zuweist, ohne dass der Datensatz vollständig in dem Token gespeichert ist. Eine solche Zugriffsmöglichkeit kann zum Beispiel ein Link (insbesondere in Kombination mit einem Kennwort) in einem Kommunikationsnetzwerk sein, über den der Token das Berechtigungsprofil (insbesondere kennwortgeschützt) abrufen kann. Eine solche Zugriffsmöglichkeit kann auch darin bestehen, dass ein Token das personalisierte Berechtigungsprofil von einem mechanisch mit dem Token gekoppelten Handwerkergerät abrufen kann, wenn diese mechanische Kopplung besteht.

Gemäß einem exemplarischen Ausführungsbeispiel der Erfindung kann ein Token ein damit gekoppeltes Handwerkergerät in benutzerspezifischer bzw. benutzerbezogener Weise steuern. Zu diesem Zweck kann der Token einen Benutzer zunächst identifizieren, um dann als Basis für das Steuern des Handwerkergeräts ein personalisiertes Berechtigungsprofil des identifizierten Benutzers in Bezug auf das zur gewünschten Nutzung ausgewählte Handwerkergerät berücksichtigen zu können. Insbesondere ausgelöst durch das Ausbilden einer mechanischen Kopplung zwischen Token und Handwerkergerät kann dann eine Benutzung des Handwerkergeräts durch den Benutzer gewährt oder ein Zugriffsrecht verweigert werden bzw. kann die Art und Weise der Benutzung in Übereinstimmung mit dem personalisierten Benutzerprofil reglementiert werden. Durch Zuweisung eines benutzerbezogenen Berechtigungsprofils zu einzelnen Handwerkergeräten einer Handwerkerausstattung kann selbst in komplexen Systemen mit einer großen Vielzahl von Handwerkergeräten, Token und Benutzern ein mittels eines insbesondere benutzerbezogenen Token schnell durchführbarer und fehlerrobuster Abgleich zwischen Benutzerprofilen und Handwerkergeräten vorgenommen werden und somit ein effizientes Zugriffsmanagement erreicht werden. Gleichzeitig kann ein hohes Maß an Betriebssicherheit erreicht werden, da selbst bei einer unübersichtlich großen Anzahl von Handwerkergeräten, Benutzern und Token die Verwaltung von Berechtigungen effizient und sicher ermöglicht ist.

Im Weiteren werden zusätzliche exemplarische Ausführungsbeispiele des Token, der Handwerkerausstattung und des Verfahrens beschrieben.

Gemäß einem exemplarischen Ausführungsbeispiel kann das Berechtigungsprofil des Benutzers in der Speichereinrichtung das Token gespeichert sein. Dann ist ein direkter Zugriff, insbesondere des Prozessors des Token, auf das Benutzerprofil möglich. Der Token selbst ist gemäß dieser Ausgestaltung bereits individualisiert und personalisiert.

Gemäß einem anderen exemplarischen Ausführungsbeispiel kann der Token eine Kommunikationseinrichtung (zum Beispiel aufweisend eine Sende- und/oder Empfangs-Antenne) aufweisen, die zum Kommunizieren mittels eines Kommunikationsnetzwerks (beispielsweise das öffentliche Internet, ein Intranet oder ein Mobilfunknetzwerk) zum Erlangen des Berechtigungsprofils des mittels der Identifizierungseinrichtung identifizierten Benutzers unter Verwendung der Zugang gewährenden Information ausgebildet sein. Gemäß einer solchen Ausgestaltung ist das Benutzerprofil nicht direkt auf dem Token gespeichert, aber zum Beispiel durch einen entsprechenden Link von einem Knoten im Kommunikationsnetzwerk abrufbar, mit dem der Token kommunizieren kann. Bei besagtem Knoten kann sich zum Beispiel um eine zentrale Steuereinrichtung der Handwerkerausstattung handeln, der Zugriff auf eine zentrale Speichereinrichtung oder eine Datenbank haben kann, in der zum Beispiel zentral für eine Vielzahl von Token und für eine Vielzahl von Benutzern eine Vielzahl von (vorzugsweise Handwerkergeräte-bezogene) Berechtigungsprofile gespeichert sind. Bei Vorsehen einer solchen zentralen Speicherressource können die dezentralen Speicherressourcen der Vielzahl von Token reduziert werden oder sogar ganz entbehrlich sein. Dies reduziert den gesamten hardwaretechnischen Aufwand der Handwerkerausstattung.

Gemäß einem exemplarischen Ausführungsbeispiel kann die Identifizierungseinrichtung einen Benutzeridentifizierungssensor aufweisen, insbesondere einen Fingerprintsensor oder einen Gesichtserkennungssensor. Ein solcher Benutzeridentifizierungssensor kann an dem Token selbst vorgesehen sein, insbesondere an einer äußeren Sensoroberfläche des Token. Möchte ein Benutzer ein Handwerkergerät (zum Beispiel eine Bohrmaschine) einer Handwerkerausstattung (beispielsweise eines Maschinenparks) benutzen, legt er einfach einen Finger auf den Fingerprintsensor seines Token und identifiziert sich dadurch gegenüber dem Token. Der Token kann auf Basis dieser Identifizierungsinformation das einschlägige Benutzerprofil des Benutzers ermitteln. Durch mechanisches Koppeln des Token mit einem Handwerkergerät, das der Benutzer verwenden möchte, kann die Durchführung eines Abgleichs ausgelöst werden, um zu ermitteln, ob die Benutzung des Handwerkergeräts angesichts des Benutzerprofils des Benutzers zugelassen ist oder nicht, und gegebenenfalls ob die Benutzung des Handwerkergeräts angesichts der Attribute des Benutzers und/oder des Handwerkergeräts Einschränkungen unterworfen ist. Aus Sicht des Benutzers ist für diesen komplexen Vorgang nichts weiter erforderlich als die Durchführung einer Benutzeridentifizierung mittels des Benutzeridentifizierungssensors des Token und ein mechanisches Koppeln des Token mit dem Handwerkergerät. Sonst braucht ein Benutzer nichts zu tun. Der Prozess der benutzerspezifischen Verwaltung von Zugriffsrechten auf Handwerkergeräte ist also aus Sicht eines Benutzers einfach und unkompliziert und aus Sicht der Handwerkerausstattung fehlerrobust.

Gemäß einem exemplarischen Ausführungsbeispiel kann der Prozessor ausgebildet sein, eine mittels der Identifizierungseinrichtung ermittelte Benutzeridentität mit dem Berechtigungsprofil abzugleichen und basierend hierauf zu steuern, ob die Benutzung des Handwerkergeräts durch den Benutzer zugelassen oder unterbunden und/oder wie die Benutzung eingestellt wird. Die Gewährung von uneingeschränkten oder eingeschränkten Zugriffsrechten oder die Verweigerung eines Zugriffsrecht auf ein Handwerkergerät kann also durch Abgleich eines durch die Identifizierung des Benutzers identifizierten Berechtigungsprofils mit einem Handwerkergerät erfolgen, für das ein Benutzer durch mechanisches Koppeln mit seinem Token einen Zugriffswunsch zum Ausdruck bringt.

Gemäß einem exemplarischen Ausführungsbeispiel kann das personalisierte Berechtigungsprofil zumindest eine Information aus einer Gruppe aufweisen, die besteht aus einem auf eine Benutzerqualifikation und/oder auf ein körperliches oder biologisches Benutzermerkmal bezogenes Benutzungsverbot für mindestens einen definierten Betriebsmodus des Handwerkergeräts, einer benutzerspezifischen Benutzungserlaubnis für mindestens einen definierten Betriebsmodus des Handwerkergeräts, und einer arbeitsschutzbezogenen Benutzungsbedingung für die Benutzung des Handwerkergeräts. Eine Benutzerqualifikation, die in einem Berechtigungsprofil eines Benutzers Niederschlag finden kann, ist beispielsweise eine erfolgte Einweisung in die Benutzung eines Handwerkergeräts (zum Beispiel eine Kettensäge) und/oder das Vorliegen eines in einer Jurisdiktion erforderlichen Berechtigungsnachweises zum Betrieb eines Handwerkergeräts (zum Beispiel ein Führerschein, der zum Führen eines Gabelstaplers berechtigt). Ein körperliches Benutzermerkmal kann zum Beispiel eine körperliche Einschränkung eines Benutzers sein, die zum Beispiel aus medizinischen Gründen oder aus Gründen der Arbeitssicherheit eine Beschränkung der Verwendung eines Handwerkergeräts bedingt. Ein biologisches Benutzermerkmal kann zum Beispiel ein Lebensalter sein, die zum Beispiel aus medizinischen Gründen oder aus Gründen der Arbeitssicherheit eine Beschränkung der Verwendung eines Handwerkergeräts bedingt. Beispielsweise kann Benutzern oberhalb oder unterhalb eines bestimmten Lebensalters eine Verwendung von Handgeräten lediglich bis zu einem vorgegebenen Grenzgewicht gestattet werden, was ebenfalls Niederschlag in dem personalisierten Berechtigungsprofil finden kann. Aus Gründen des Arbeitsschutzes kann es für die Verwendung bestimmter Handwerkergeräte vorgeschrieben sein, bestimmte Schutzausrüstung (zum Beispiel Schutzbrille, Schutzkittel, etc.) zu tragen. Die Verwendung eines solchen Handwerkergeräts kann einem Benutzer beispielsweise verweigert werden, bis verifiziert worden ist, dass der Benutzer die vorgeschriebene Schutzausrüstung trägt. Beispielsweise kann zu diesem Zweck eine Schutzausrüstung mit einem Token versehen werden, der mit einem mit einem Handwerkergerät mechanisch gekoppelten Token kommunizierfähig gekoppelt sein kann. Erst wenn dem Token an dem Handwerkergerät durch Kommunikation mit dem Token an der Schutzausrüstung angezeigt ist, dass die erforderliche Schutzausrüstung vorhanden ist, kann durch den Prozessor des Token in dem Handwerkergerät die Benutzung des Handwerkergeräts gestattet werden. Dadurch kann die Betriebssicherheit erhöht werden.

Gemäß einem exemplarischen Ausführungsbeispiel kann der Prozessor ausgebildet sein, bei Koppeln mit dem Handwerkergerät basierend auf dem personalisierten Berechtigungsprofil ein Herunterladen eines Datensatzes, insbesondere eines ein Betriebsablauf des Handwerkergeräts definierenden Datensatzes, aus einem Kommunikationsnetzwerk zuzulassen oder zu unterbinden. Ergibt ein Abgleich des Berechtigungsprofils eines identifizierten Benutzers mit einem Handwerkergerät, für den der Benutzer durch mechanisches Koppeln mit seinem Token einen Benutzungswunsch zum Ausdruck bringt, dass die Benutzung ganz oder teilweise gestattet wird, kann ein Download von Betriebsinformation betreffend dieses Handwerkergerät ausgelöst oder gestattet werden. Der Prozessor des Token kann die Benutzung des Handwerkergeräts dann auf Basis der heruntergeladenen Betriebsinformation steuern.

Gemäß einem exemplarischen Ausführungsbeispiel kann der Prozessor ausgebildet sein, den Betrieb des mit dem Token gekoppelten Handwerkergeräts nur dann freizugeben, wenn eine mittels des Token vorab durchgeführte Benutzeridentifizierung zu dem Ergebnis geführt hat, dass ein sich identifizierender Benutzer für den Betrieb des Handwerkergeräts berechtigt ist. Gemäß einem exemplarischen Ausführungsbeispiel kann ein Betrieb des Handwerkergeräts ohne Kopplung mit dem Token unterbunden sein. Ohne positive Verifizierung einer Benutzerberechtigung eines Benutzers zur Benutzung eines bestimmten Handwerkergeräts kann die Benutzung des Handwerkergeräts deaktiviert sein. Wenn ein Benutzer ohne oder vor Verifizierung der Benutzungsberechtigung einen Betätigungsknopf einer Bohrmaschine betätigt, verunmöglicht der Prozessor des Token den Bohrbetrieb der Bohrmaschine. Die Notwendigkeit einer positiven Bestätigung der Benutzungsbefugnis eines Handwerkergeräts durch einen Benutzer erhöht die Betriebssicherheit und vermeidet Missbrauch.

Gemäß einem exemplarischen Ausführungsbeispiel kann der Prozessor des Token ausgebildet sein, bei Koppeln mit unterschiedlichen Handwerkergeräten eine Benutzung des jeweiligen Handwerkergeräts durch den Benutzer basierend auf dem personalisierten Berechtigungsprofil in unterschiedlicher Weise zuzulassen, einzustellen und/oder zu unterbinden. Das personalisierte Berechtigungsprofil eines Benutzers kann also auf mehrere unterschiedliche Handwerkergeräte hin unterschiedlich individualisiert sein, d.h. kann unterschiedliche Nutzungsrechte, Nutzungsbeschränkungen und/oder Nutzungsverbote eines Benutzers hinsichtlich unterschiedlicher Handwerkergeräte definieren.

Gemäß einem exemplarischen Ausführungsbeispiel kann der Token eine Detektionseinrichtung, insbesondere eine Kamera, aufweisen, die zum Detektieren einer für eine mittels des Handwerkergeräts auszuführenden Bearbeitungsaufgabe indikativen Bearbeitungsinformation ausgebildet ist, wobei der Prozessor zum Ausführen der Bearbeitungsaufgabe unter Verwendung der detektierten Bearbeitungsinformation ausgebildet ist. Zum Beispiel kann mittels einer optischen Detektionseinrichtung des Token erkannt werden, welches Befestigungsmittel (zum Beispiel eine M8 Schraube) ein Benutzer mit einem beispielsweise als Akkuschrauber ausgebildeten Handwerkergerät in einen Untergrund setzen möchte. Der Prozessor des Token kann dann die Betriebsweise des Handwerkergeräts auf die erkannte Information hin anpassen, zum Beispiel ein Drehmoment entsprechend einstellen. Es ist auch möglich, dass die (beispielsweise optische) Detektionsinformation nicht von dem Token, sondern beispielsweise von einer Kamera des Handwerkergeräts oder von einer Kamera eines Benutzerendgeräts (zum Beispiel eines Mobilfunkgeräts) geliefert wird, das ein Benutzer mit sich führt (und optional auch zum benutzerdefinierten Steuern eines Token verwendet werden kann).

Gemäß einem exemplarischen Ausführungsbeispiel kann der Token eine mechanische Kopplungseinrichtung aufweisen, die zum mechanischen Koppeln mit unterschiedlichen Handwerkergeräten ausgebildet ist, wobei der Token ausgebildet ist, bei mechanischem Koppeln der mechanischen Kopplungseinrichtung mit einem Handwerkergerät mittels des Prozessors das besagte Handwerkergerät zu steuern. Im Rahmen der vorliegenden Anmeldung kann unter einer "mechanischen Kopplungseinrichtung" insbesondere eine physische Struktur oder ein Formfaktor des Token verstanden werden, die bzw. der zum Beispiel formschlüssig und/oder reibschlüssig mit einer korrespondierenden physischen Struktur eines Handwerkergeräts gekoppelt werden kann, um dadurch eine insbesondere vorübergehende und wohldefinierte mechanische Verbindung zwischen Token und Handwerkergerät auszubilden. Beispielsweise kann der Token in eine entsprechend geformte Aufnahmeöffnung des Handwerkergeräts eingeführt werden, um Token und Handwerkergerät mechanisch zu koppeln. Hierbei kann die mechanische Kopplungseinrichtung ausgebildet sein, durch bloßes Ausbilden einer mechanischen Kopplung mit einem Handwerkergerät simultan eine kommunizierfähige Kopplung zwischen Token und Handgerät herzustellen. Das Ausbilden einer mechanischen Kopplung zwischen einem Handwerkergerät und einem Token kann von dem Prozessor des Token als Wunsch des Benutzers zum Betrieb des Handwerkergeräts interpretiert werden und kann einen Abgleich eines personalisierten Benutzerprofils des Benutzers mit dem mechanisch gekoppelten Handwerkergerät auslösen. Durch diese Triggerlogik kann schnell und mit hohem Benutzerkomfort der Berechtigungsabgleich durchgeführt werden und die Benutzung des Handwerkergeräts durch den Benutzer freigegeben werden, falls das personalisierte Benutzerprofil dies zulässt.

Gemäß einem exemplarischen Ausführungsbeispiel kann die mechanische Kopplungseinrichtung ausgebildet sein, den Token von dem Handwerkergerät abnehmbar zu koppeln. Auf diese Weise kann ein Benutzer, der ein Handwerkergerät benutzen möchte, einen ihm zugeordneten Token mit dem Handwerkergerät mechanisch koppeln und nach Beendigung der Benutzung den Token wieder aus dem Handwerkergerät entnehmen, um den Token nachfolgend in Kombination mit einem anderen Handwerkergerät zu nutzen. Das Handwerkergerät kann ausgebildet sein, nur während Bestehens einer mechanischen Kopplung mit einem Token eine Steuerung des Handwerkergeräts durch den Token oder eine Benutzung des Handwerkergeräts zuzulassen.

Gemäß einem exemplarischen Ausführungsbeispiel kann die mechanische Kopplungseinrichtung eine elektromechanische Schnittstelle aufweisen, insbesondere eine für unterschiedliche Handwerkergeräte universelle elektromechanische Schnittstelle. Unter einer elektromechanischen Schnittstelle kann hierbei verstanden werden, dass das Ausbilden einer mechanischen Verbindung zwischen der mechanischen Kopplungseinrichtung des Token und einer korrespondierenden mechanischen Aufnahme- oder Verbindungseinrichtung des Handwerkergerätes simultan zum Ausbilden einer elektrischen Kopplung zwischen Token und Handwerkergerät führt. Dann kann mit einem beispielsweise formschlüssigen Koppeln von Token und Handwerkergerät auch eine Übermittlung eines elektrischen Steuersignals von einem elektrischen Kontakt des Token zu einem elektrischen Kontakt des Handwerkergeräts ermöglicht werden. Eine solche Handwerkerausstattung ist besonders fehlerrobust im Betrieb.

Gemäß einem exemplarischen Ausführungsbeispiel kann der Token ausgebildet sein, bei mechanischem Koppeln der mechanischen Kopplungseinrichtung mit einem Handwerkergerät eine Kommunikationsverbindung, insbesondere eine kontaktlose oder kontaktbehaftete Kommunikationsverbindung, mit dem Handwerkergerät auszubilden. Bezugnehmend auf das vorangehend beschriebene Ausführungsbeispiel betreffend eine elektromechanische Kopplung zwischen Token und Handwerkergerät kann eine kontaktbehaftete elektrische Kommunikation zwischen Token und Handwerkergerät bevorzugt erst mit dem Ausbilden der mechanischen Verbindung ermöglicht werden. Dies ermöglicht einem Benutzer, die Steuerungshoheit durch einen intuitiven Verbindungsprozess zu behalten. Alternativ kann erst durch das Ausbilden einer mechanischen Kopplung zwischen dem Token und dem Handwerkergerät eine kontaktlose Kommunikationsverbindung zwischen Token und Handwerkergerät ausgebildet werden. Zum Beispiel kann erst durch Einführen des Token in das Handwerkergerät ein drahtloser Transponder (zum Beispiel ein RFID-Tag) des Token in einen Lesbarkeitsabstand eines Transponder-Lesegeräts (zum Beispiel ein RFID-Lesegerät) des Handwerkergeräts gebracht werden. Dies kann beispielsweise durch Verwenden eines kurzreichweitigen Kommunikationsprotokolls (zum Beispiel NFC, near field communication) für die drahtlose Kommunikation zwischen Token und Handwerkergerät erreicht werden.

Gemäß einem exemplarischen Ausführungsbeispiel kann das Handwerkergerät eine Speichereinrichtung zum Speichern des Berechtigungsprofils aufweisen. Insbesondere kann die Speichereinrichtung des Handwerkergeräts mit dem Token kommunizierfähig koppelbar sein, insbesondere um das Berechtigungsprofil mittels des Token in der Speichereinrichtung zu speichern und/oder von der Speichereinrichtung herunterzuladen. Auf diese Weise kann auch in dem Handwerkergerät ein Berechtigungsprofil gespeichert werden, auf welches ein Token (zum Beispiel ausgelöst durch ein mechanisches Koppeln des Token mit dem Handwerkergerät) Zugriff erlangen kann. Dadurch können die hardwaretechnischen Ressourcen des Token reduziert werden, da dieses einen Datensatz mit einem personalisierten Berechtigungsprofil eines Benutzers auch aus einem Handwerkergerät herunterladen kann.

Gemäß einem exemplarischen Ausführungsbeispiel kann das Handwerkergerät als ein motorisches oder elektrisches Handgerät aus einer Gruppe ausgebildet sein, die besteht aus einer Bohrmaschine, einem Akkuschrauber, einem Akku-Bohrschrauber, einem Drehschrauber, einem Impulsschrauber, einem Ratschenschrauber, einem Schlagschrauber, insbesondere einem Akku-Schlagschrauber, und einem Hammerbohrer.

Gemäß einem exemplarischen Ausführungsbeispiel kann die Handwerkerausstattung eine Mehrzahl von Handwerkergeräten aufweisen, von denen zumindest einige zum Zusammenwirken mit dem Token ausgebildet sind. Bevorzugt kann in einer Handwerkerausstattung eine Vielzahl (insbesondere mindestens zehn, weiter insbesondere mindestens hundert) von Handwerkergeräten und eine Vielzahl von Token (insbesondere mindestens zehn, weiter insbesondere mindestens hundert) zur Verwaltung von Nutzungsrechten einer Vielzahl von Benutzern (insbesondere mindestens zehn, weiter insbesondere mindestens hundert) enthalten sein. Das beschriebene System ist problemlos skalierbar und auch bei komplexesten Maschinenparks fehlerrobust einsetzbar.

Gemäß einem exemplarischen Ausführungsbeispiel können die Handwerkergeräte mindestens zwei unterschiedliche Elemente aus einer Gruppe ausweisen, die besteht aus einem elektrischen oder motorischen Handgerät (zum Beispiel einer Bohrmaschine), einem Werkzeug (zum Beispiel einem Bohrer oder einem Schraubendreher) oder einem Werkzeugsatz (beispielsweise einem Bohrersatz in einer Bohrerbox), einem Bevorratungssystem (zum Beispiel einem Koffer oder einer Werkzeugkiste), einem Verbrauchsgut (zum Beispiel einem Bolzenanker oder einer Schachtel mit Dübeln) und einem Fahrzeug (beispielsweise einem Personenkraftwagen oder einem Gabelstapler). Gemäß einem bevorzugten Ausführungsbeispiel können mehrere Handgeräte, mehrere Werkzeuge, mehrere Bevorratungssysteme, mehrere Verbrauchsgüter und mehrere Fahrzeuge als Handwerkerausstattung verwaltet werden. Gemäß einer Konfiguration mit einer Vielzahl von Token und einer Vielzahl von Handwerkergeräten unterschiedlicher Typen, bei der ein jeweiliger Token mit jedem beliebigen Handwerkergerät mechanisch gekoppelt und dadurch in Funktionsverbindung gebracht werden kann, ist ein komplexes und beliebig skalierbares System geschaffen, das ein effizientes und betriebssicheres Management auch einer großen Anzahl von Handwerkergeräten ermöglicht. Indem eine Kommunikation zwischen einem jeweiligen Token und einem damit mechanisch gekoppelten Handwerkergerät und/oder eine Kommunikation zwischen unterschiedlichen Token und/oder mindestens einem weiteren Knoten in einem zugehörigen Kommunikationsnetzwerks zugelassen wird, kann auch ein riesiges, diversifiziertes und räumlich dezentrales System aus Handwerkergeräten (beispielsweise ein Maschinenpark oder Handwerkerequipment eines Unternehmens) fehlerrobust, betriebssicher und missbrauchssicher verwaltet werden.

Gemäß einem exemplarischen Ausführungsbeispiel kann der Prozessor ausgebildet sein, eine Benutzung des Handwerkergeräts durch den Benutzer erst dann zuzulassen, wenn ein Tragen einer für die Benutzung des Handwerkergeräts vorgeschriebenen Arbeitsschutzeinrichtung durch den Benutzer verifiziert wurde. Insbesondere kann der Prozessor ausgebildet sein, die Arbeitsschutzeinrichtung sensorisch zu erkennen, insbesondere mittels einer Kamera des Token und/oder des Handwerkergeräts und/oder mittels Kommunizierens mit einer Kommunikationseinrichtung oder einem Token der Arbeitsschutzeinrichtung. Ohne positiven - insbesondere sensorisch erfassten oder durch eine Kommunikationsnachricht belegten - Nachweis, dass für den Betrieb eines Handwerkergeräts erforderliche Arbeitsschutzausrüstung von einem Benutzer getragen wird, kann der Betrieb eines zugehörigen Handwerkergeräts deaktiviert sein. Zum Beispiel kann mit einer Kamera des Token, des Handwerkergeräts oder eines Benutzerendgeräts sensorisch erfasst werden, ob der Benutzer die besagte Arbeitsschutzeinrichtung trägt. Es ist auch möglich, dass Arbeitsschutzeinrichtung mit einem weiteren Token versehen wird, der mit dem Token an einem Handwerkergerät drahtlos kommunizieren kann und dadurch die Anwesenheit der Arbeitsschutzeinrichtung im Wege einer Kommunikationsnachricht belegen kann.

Im Folgenden werden exemplarische Ausführungsbeispiele der vorliegenden Erfindung mit Verweis auf die folgenden Figuren detailliert beschrieben.
Figur 1 zeigt eine Handwerkerausstattung mit Handwerkergeräten und Token gemäß einem exemplarischen Ausführungsbeispiel der Erfindung, die in einem Kommunikationsnetzwerk mit zusätzlichen kommunizierfähigen Knoten gekoppelt sind.
Figur 2 zeigt einen Token mit einer zugehörigen Aufbewahrungs- und Wiederaufladevorrichtung gemäß einem exemplarischen Ausführungsbeispiel der Erfindung.
Figur 3 zeigt einen Token gemäß einem exemplarischen Ausführungsbeispiel der Erfindung.
Figur 4 zeigt Komponenten einer Handwerkerausstattung gemäß einem anderen exemplarischen Ausführungsbeispiel der Erfindung.
Figur 5 zeigt eine Handwerkerausstattung mit Handwerkergeräten und einem Token gemäß einem exemplarischen Ausführungsbeispiel der Erfindung, die in einem Kommunikationsnetzwerk gekoppelt sind.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte von Ausführungsbeispielen der Erfindung erläutert werden.

Gemäß einem exemplarischen Ausführungsbeispiel kann ein Token für eine Verwendung mit einem Handwerkergerät (zum Beispiel für eine Werkzeugmaschine) eingesetzt werden.

Hierbei kann der Token beispielsweise mit einem kombinierten elektrischen und mechanischen Aufbau bereitgestellt werden. Genauer gesagt können unterschiedliche Token einer Token-Anordnung einen gemeinsamen elektrischen und/oder mechanischen Grundaufbau haben, aber sich darüber hinaus hinsichtlich eines variablen elektrischen und/oder mechanischen Zusatzaufbaus unterscheiden. Als feste Konstituenten können unterschiedliche Token einer Token-Anordnung einen Prozessor (der zum Beispiel auch Nachverarbeitungs- und/oder Datenverdichtungs-Aufgaben ausführen kann), eine Kommunikationseinrichtung, und eine Kryptographieeinheit (insbesondere einen Decrypter) aufweisen. Ein variabler Anteil unterschiedlicher Token einer Token-Anordnung kann zum Beispiel Unterschiede hinsichtlich mindestens einer Sende-/ Empfangs-Einheit, mindestens einer Antenne und/oder mindestens eines Sensors aufweisen. Ein jeweiliger Token kann als Gegenstand ausgebildet sein, der eine Packaging-Komponente, eine oder mehrere Einschübe, eine Kompatibilität mit einer Batterie, und oder einen Leiteradapter aufweisen kann. Es ist auch möglich, dass ein Token mit elektrischem Strom von extern versorgt wird. Gemäß einem exemplarischen Ausführungsbeispiel kann ein Token-System eine (insbesondere indirekte) Steuerung eines Handwerkergerätes unter Einsatz eines Berechtigungskonzepts ausführen, insbesondere unter Einsatz eines personalisierten Berechtigungskonzepts.

Token einer Token-Anordnung können unterschiedliche Grade an Funktionalität aufweisen, und daher unterschiedlichen Generationen zugeordnet werden. Beispielsweise kann ein Token eines ersten Grads an Funktionalität prozessortechnisch bzw. kommunikativ als BLE-fähiger Token mit beschränkter Sensorik (beispielsweise lediglich mit einem Temperatur- und einem VibrationsSensor) ausgestattet sein. Mit einem solchen Token können beispielsweise Datenblätter von einem zentralen Knoten eines Kommunikationsnetzwerks heruntergeladen werden. Die Durchführung einer Bearbeitungsaufgabe mittels eines einem Token zugeordneten Handwerkergeräts kann beispielsweise von einer aktuellen Umgebungstemperatur abhängig gemacht werden. Beispielsweise kann das Setzen eines chemischen Dübels nur zugelassen werden, wenn eine minimale Verarbeitungstemperatur sichergestellt ist. Ein Token zweiter Generation kann zum Beispiel prozessortechnisch bzw. kommunikativ als Ultrabreitband-Token ausgebildet sein, der zusätzlich mit einem Gyrosensor ausgerüstet werden kann. Zum Beispiel kann ein solcher Gyrossensor erkennen, wenn ein Handgerät (beispielsweise eine Bohrmaschine) auf dem Boden fällt und kann das Handgerät dann automatisch abschalten. Ein Token dritter Generation kann wiederum zusätzlich mit einer NB IoT (Narrow Band Internet of Things) Funktionalität ausgerüstet werden und zusätzlich mit einem GPS-Sensor. Ein Token dritter Generation kann somit dazu in der Lage sein, eine Ortsbestimmung des Token und eines damit mechanisch gekoppelten Handwerkergeräts durchzuführen und eine Freigabe zum Betrieb des Handwerkergeräts nur zu erteilen, wenn der ermittelte Ort für den beabsichtigten Betrieb des Handwerkergeräts zugelassen ist. Beispielsweise kann die Inbetriebnahme eines Baggers nur freigegeben werden, wenn sich der Bagger auf einer bestimmten Baustelle befindet. Dadurch ist ein Missbrauchsschutz bereitgestellt.

Gemäß einem exemplarischen Ausführungsbeispiel der Erfindung bildet ein Token eine Basiseinheit eines Systems zum gesteuerten Betrieb von Handwerkergeräten. Ein solche Token kann einen festen Bestandteil (insbesondere mit Microcontroller, Decrypter) aufweisen, der in jedem Token einer Token-Anordnung enthalten sein kann. Ferner kann jeder Token einer Token-Anordnung eine elektromechanische Anbindung zu Handwerkergeräten ermöglichen (insbesondere einen oder mehrere elektrische Kontakte zum elektrischen Koppeln mit einem Handwerkergerät bereitstellen). Darüber hinaus können Token einer Token-Anordnung einen variablen Anteil aufweisen, der für unterschiedliche Token unterschiedlich sein kann. Ein solcher variabler Anteil kann die Ausstattung eines Token mit einem oder mehreren Sensoren (zum Beispiel Fingerprintsensor, Gyroskop, GPS-Sensor, UWB-Sensor, Temperatursensor), mindestens einem Funkchip (zum Beispiel konfiguriert gemäß Bluetooth Low Energy, Bluetooth, NB-IoT, LTE Cat. M, 5G, NFC) und/oder mindestens einer Antenne (zum Beispiel konfiguriert gemäß 2.5 GPS, BLE, UWB, NB-IoT) betreffen. Optional kann ein Token mit einer eigenen Stromversorgung ausgerüstet werden, beispielsweise einer Batterie oder einem Akku.

Ein oder mehrere Token mit den beschriebenen Eigenschaften kann oder können einen Teil eines Systems einer Handwerkerausstattung bilden, das zudem Handwerkergeräte (wie zum Beispiel Akku-Bohrer, Werkzeuge, Koffer, Regale, etc.) umfassen kann. Auch Software-Komponenten (zum Beispiel eine IoT Cloud-Software, eine App, etc.) können Teil eines solchen Systems sein.

Bevorzugt weist ein Token gemäß einem exemplarischen Ausführungsbeispiel der Erfindung eine mechanische Kopplungseinrichtung auf, die als elektromechanische Kopplung ausgebildet sein kann. Diese mechanische Kopplungseinrichtung kann an oder in elektromechanische Kupplungen von Handwerkergeräten (wie zum Beispiel Handgeräten, Werkzeugen, Koffern, Regale, etc.) gesteckt werden. Es ist auch möglich, eine mechanische Kopplungseinrichtung eines Token an oder in einem dafür vorgesehenen Gehäuse (zum Beispiel eines Trackers) oder an oder in weiteren Geräten (zum Beispiel eine Vorrichtung zum Befüllen entleerter Spraydosen und dergleichen) anzubringen.

Im Betrieb kann ein Token mit dem Handwerkergerät oder einer sonstigen Vorrichtung, in das bzw. die der Token gesteckt werden ist, kommunizieren. Auf diese Weise kann ein Token feststellen, an bzw. in welchem Gegenstand der Token steckt. Daher ist ein einheitlicher Bus für alle Gegenstände vorteilhaft. Dies stellt sicher, dass in einem komplexen System einer Handwerkerausstattung (beispielsweise ein Maschinenpark oder Handwerkerausrüstung eines Unternehmens) jeder Token mit jedem Handwerkergerät in mechanische und kommunikative Verbindung (insbesondere Steuer-Verbindung) gebracht werden kann. Allgemeiner ausgedrückt können alle Handwerkergeräte einer Handwerkerausstattung mit einer mechanisch identisch ausgebildeten mechanischen Verbindungseinrichtung ausgestattet sein, die alle eine wahlweise Kopplung mit demselben Token ermöglichen. Anders ausgedrückt kann der Token als Modul in all diese Gegenstände modulartig steckbar sein.

Gemäß einem exemplarischen Ausführungsbeispiel kann ein Token Dokumente und/oder Steuersignale zu dem Handwerkergerät (zum Beispiel einem Akkubohrer) übermitteln, in das der Token gesteckt wurde. Alternativ oder ergänzend ist es möglich, dass ein Token Dokumente betreffend ein mit einem Handgerät verbundenes Zusatzgerät (zum Beispiel ein Werkzeug, ein Adapter, etc.) runterlädt. Ein Token kann auch Dokumente betreffend ein mit einem Handwerkergerät zu verarbeitenden Werkstück (zum Beispiel ein Betonanker) runterladen und damit das Handwerkergerät entsprechend steuern (zum Beispiel Steuern einer Drehzahl zum Bohren und/oder Eindrehen eines Betonankers).

Bevorzugt kann ein Token Berechtigungen für ein Handwerkergerät (zum Beispiel ein Handgerät, Werkzeug, Koffer, Regal, etc.) runterladen, damit das Handwerkergerät nur in einem bestimmten räumlichen Bereich betrieben werden kann (zum Beispiel Bohrmaschinen nur auf einer Baustelle). Hierfür kann zum Beispiel ein GPS-Sensor in dem Token oder zugehörigen Handwerkergerät implementiert sein, der aktuelle Ortsinformation liefert.

Insbesondere kann ein Token gemäß einem exemplarischen Ausführungsbeispiel der Erfindung Berechtigungen für ein Handwerkergerät (zum Beispiel ein Handgerät, Werkzeug, Koffer, Regal, etc.) runterladen, damit das Handwerkergerät nur von bestimmten Personen benutzt oder betrieben werden kann (beispielsweise nur eingewiesenes Personal). Der Token kann insbesondere Berechtigungen für das Handwerkergerät runterladen, damit das Handwerkergerät nur mit bestimmter persönlicher Schutzausrüstung betrieben werden kann.

Ein Token kann ein mechanisch damit gekoppeltes Handwerkergerät steuern, zum Beispiel einen Staubsauger ein- bzw. ausschalten. Zum Beispiel kann der Token beim Einschalten einer Bohrmaschine auch ein Einschalten einer Bohrmehlabsaugung auslösen, sodass ein Benutzer zum Einschalten eines zugehörigen Staubsaugers keine weitere Hand benötigt.

Gemäß einem Ausführungsbeispiel kann ein Token mit einem optischen Sensor (beispielsweise einer Kamera oder einem Laserscanner) ausgestattet sein, um ein Produkt oder einen Körper (zum Beispiel eine Wand oder eine Schraube) zu identifizieren, der mit einem Handwerkergerät verarbeitet wird.

Es ist auch möglich, dass der Token von einem damit kommunizierfähig gekoppelten Knoten eines Kommunikationsnetzwerks Produktinformation zu dem Produkt herunterlädt. Dem Token oder einem damit mechanisch gekoppelten Handwerkergerät ist dann bekannt, wie das Produkt zu verarbeiten ist, beispielsweise welches Drehmoment aufzubringen ist.

Gemäß einem exemplarischen Ausführungsbeispiel der Erfindung kann ein beispielsweise benutzerbezogener Token zum Bereitstellen, Auffinden und/oder Verarbeiten eines personalisierten Berechtigungsprofils des Benutzers in Bezug auf die Benutzung von in dem personalisierten Berechtigungsprofil in Bezug genommene Handwerkergeräte überprüft werden. In diesem Berechtigungsprofil können basierend auf persönlichen oder körperlichen Attributen, Qualifikationen und/oder Einschränkungen des Benutzers Zugriffs- oder Benutzungsrechte sowie deren Grenzen geregelt sein. Nach (insbesondere sensorischer) Identifizierung eines Benutzers kann dessen personalisiertes Berechtigungsprofil identifiziert und dahingehend analysiert werden, ob es die Benutzung eines bestimmten Handwerkergeräts erlaubt. Dieses Handwerkergerät kann von einem Benutzer dadurch ausgewählt werden, dass der Benutzer eine mechanische Kopplung zwischen seinem Token und diesem Handwerkergerät herstellt. Ein Verunmöglichen der Benutzung eines Handwerkergeräts kann vorteilhaft erst dann aufgehoben werden, wenn für den identifizierten Benutzer anhand des personalisierten Berechtigungsprofils verifiziert worden ist, dass der Benutzer zur Benutzung dieses Handwerkergeräts befugt ist. Es ist auch möglich, eine nur eingeschränkte oder bedingte Benutzung eines solchen Handwerkergeräts zu gestatten.

Gemäß einem exemplarischen Ausführungsbeispiel der Erfindung kann eine Handwerkerausstattung, d.h. Komponenten einer Arbeitsumgebung eines Handwerkers, hinsichtlich der Zugriffsrechte eines Benutzers auf diese Komponenten effizient verwaltet werden. Die besagten Komponenten können insbesondere Handgeräte, Werkzeuge, Koffer, Regale und dergleichen umfassen. Jede dieser Komponenten kann mit einer elektromechanischen Schnittstelle für einen Token ausgestattet werden, sodass ein jeweiliger Token in die elektromechanische Schnittstelle jeder Komponente abnehmbar eingesetzt werden kann. Jeder Token weist vorzugsweise eine elektromechanische Schnittstelle zur Verbindung mit einer jeweiligen elektromechanischen Schnittstelle einer jeweiligen der Komponenten auf. Vorteilhaft kann ein jeweiliger Token mit einer zugehörigen Komponente kommunizieren, damit der Token weiß, in welcher Komponente er steckt und welcher Komponente er daher aktuell zugeordnet ist. Der Token kann die ihm durch Ausbilden einer mechanischen Kopplung zugeordnete Komponente steuern, insbesondere aktivieren und deaktivieren. In diesem Zusammenhang ist es möglich, dass der Token Informationen hinsichtlich Berechtigungen für eine jeweilige Komponente enthält oder diese über ein Kommunikationsnetzwerk (zum Beispiel aus dem Internet oder einem Intranet) laden kann. Vorteilhaft können Komponenten eine Identifizierungsschnittstelle zur Identifizierung eines Nutzers der Komponente aufweisen. Ein jeweiliger Token kann auch Dokumente über ein Kommunikationsnetzwerk (insbesondere aus dem Internet oder einem Intranet) zur Steuerung und dergleichen der dem Token zugeordneten Komponente runterladen, von einer App übernehmen oder von einem Transponder oder Tag übernehmen. Mit Vorteil kann der Token eine Funk-Verbindung zu dem Kommunikationsnetzwerk (insbesondere dem Internet oder einem Intranet) aufweisen (zum Beispiel eine WLAN-Antenne, eine SIM-Karte, etc.).

Ein jeweiliger Token kann eine kommunikative Verbindung zu einem jeweiligen Handwerkergerät (zum Beispiel einem Handgerät, einem Werkzeug, einem Koffer, einem Regal, etc.) aufweisen, die insbesondere über eine kontaktlose Funkverbindung oder eine kontaktbehaftete elektrische Leitungsverbindung realisiert werden kann. Vorteilhaft kann ein Token modulartig austauschbar in ein jeweiliges Handwerkergerät eingesteckt werden. Hierfür kann ein Token vorteilhaft eine elektromechanische Schnittstelle aufweisen, die für alle Token einer Handwerkerausstattung gleich sein kann.

Gemäß einem vorteilhaften Ausführungsbeispiel kann ein Token Dokumente von einem kommunizierfähig gekoppelten Knoten runterladen, die zum Beispiel als Basis zum Steuern eines mit dem Token mechanisch gekoppelten Handwerkergeräts verwendet werden können. Ein Token gemäß einem exemplarischen Ausführungsbeispiel der Erfindung kann Berechtigungen in einem Nutzersystem für Handwerkergeräte und dergleichen aus einer Cloud laden und Handwerkergeräte und dergleichen sperren oder geeignet steuern. Es ist auch möglich, dass der Token Berechtigungen für ein Handwerkergerät am Handwerkergerät selbst speichern kann (zum Beispiel unter Einsatz eines Fingerprintsensors). Ein Benutzer kann Fingerabdrücke direkt an einem Modul speichern.

Gemäß einem exemplarischen Ausführungsbeispiel der Erfindung kann der Token in verschiedenen Varianten verschiedene Grade an Funktionalität aufweisen. Ein Token einer ersten Generation kann zum Beispiel nur eine Kommunikation gemäß Bluetooth unterstützen und hinsichtlich seiner Sensorik lediglich einen Temperatursensor und einen Vibrationssensor aufweisen. Ein Token einer zweiten Generation kann zusätzlich zu einem Token der ersten Generation auch eine Kommunikation gemäß WLAN unterstützen und hinsichtlich seiner Sensorik zusätzlich ein Gyroskop aufweisen. Ein Token einer dritten Generation kann zusätzlich zu einem Token der zweiten Generation eine Kommunikation unter Einsatz einer SIM-Karte unterstützen und hinsichtlich seiner Sensorik einen GPS-Sensor aufweisen. Ein Token einer vierten Generation kann zusätzlich zu einem Token der dritten Generation hinsichtlich seiner Sensorik einen Fingerprintsensor und als Zusatzausstattung eine App zur Verbindung mit Geräten, einem Handy, etc. aufweisen.

Gemäß einem Ausführungsbeispiel der Erfindung kann ein Token in Kommunikationsverbindung mit einer App stehen, um zum Beispiel ein Werkzeug (beispielsweise einen Bohrer) und ein Werkstück (beispielsweise einen Betonanker) zu erkennen und entsprechend zu steuern und zu verarbeiten.

Es ist möglich, eine Identifizierungseinrichtung oder Identifikationsschnittstelle über einen elektronischen Chip in Kleidung (zum Beispiel in einem Handschuh, in einem Schuh und/oder in einem Helm), über einen elektronischen Chip im Körper, über eine oder mehrere separate Tags oder Schlüssel, über ein Handy und/über eine App zu implementieren.

Vorteilhaft kann ein Token eine Diebstahlsicherung ermöglichen, da gemäß einem exemplarischen Ausführungsbeispiel der Erfindung zur Inbetriebnahme eines Handwerkergeräts eine Identifizierung eines Benutzers und eine Verifizierung der Berechtigung des identifizierten Benutzers anhand eines personalisierten Berechtigungsprofils zur Inbetriebnahme des Handwerkergeräts zur Bedingung gemacht werden kann. Beispielsweise kann ein Token mit einem Fingerprintsensor, einem Gesichtserkennungssensor oder dergleichen ausgerüstet sein, um einen Benutzer zu identifizieren. Es ist dann möglich, einen Betrieb eines Handwerkergeräts (zum Beispiel einer Maschine) nur mit entsprechend freigegebenen Token zu ermöglichen.

Ein personalisiertes Berechtigungsprofil kann auf einem Token gespeichert sein. Alternativ oder ergänzend kann ein personalisiertes Berechtigungsprofil in einer Cloud gespeichert sein. Dann kann ein Token ein personalisiertes Berechtigungsprofil betreffend einen Benutzer und ein in Betrieb zu nehmendes Handwerkergerät (zum Beispiel Werkzeuge und/oder Handgeräte) herunterladen. Das Token kann ein personalisiertes Berechtigungsprofil nach jedem Runterladen speichern, damit dieses Offline zur Verfügung steht. Ein personalisiertes Berechtigungsprofil kann alternativ oder zusätzlich in einem Handwerkergerät (insbesondere in einer Maschine oder in einem Akku) gespeichert werden. Ein Token kann sich dann an einem Handwerkergerät (insbesondere einer Maschine und/oder einem Akku) identifizieren.

Gemäß exemplarischen Ausführungsbeispielen der Erfindung ist vorteilhaft, wenn ein Berechtigungsprofil auch benutzerspezifische Daten umfasst. Ist beispielsweise eine Maschine zu schwer für einen bestimmten Nutzer, kann diese Maschine für diesen Nutzer gesperrt werden.

Vorteilhaft kann ein Token gemäß einem exemplarischen Ausführungsbeispiel der Erfindung in einen Tracker steckbar sein. Auf diese Weise kann die aktuelle Position eines jeweiligen Token ermittelt werden, zum Beispiel wenn ein einem Tracker zugeordneter Token mit Mobilfunkgeräten in seiner Umgebung kommunizieren kann und von den Mobilfunkgeräten eine entsprechende Information, beispielsweise an eine zentrale Steuereinrichtung, übermittelt wird. Auf diese Weise ist eine Ortsnachverfolgung jedes Token und daher jedes zugeordneten Handwerkergeräts ermöglicht. Ein Tracker kann an einem Handwerkergerät (zum Beispiel einem Handgerät oder einer beliebigen anderen Maschine) befestigt werden, beispielsweise durch Kleben, eine Magnetverbindung oder durch mechanisches Verrasten. Insbesondere kann ein Token in einen Tracker eingesteckt werden. Ein Tracker kann auch mit einer Energieversorgungseinrichtung (zum Beispiel einer Batterie) und einer oder mehreren Antennen (insbesondere für eine Kommunikation gemäß RFID und/oder WLAN und/oder Bluetooth) ausgestattet sein.

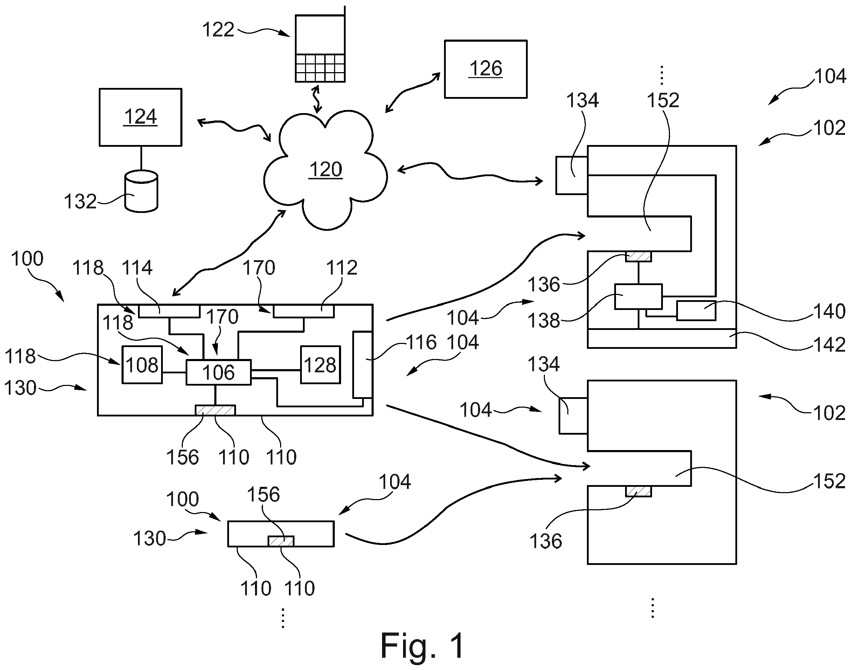

**Figur 1** zeigt eine Handwerkerausstattung 104, beispielsweise eine Werkstattausstattung oder ein Maschinenpark oder Handwerkerequipment eines Unternehmens, mit Handwerkergeräten 102 und Token 100 gemäß einem exemplarischen Ausführungsbeispiel der Erfindung, die in einem Kommunikationsnetzwerk 120 gekoppelt sind.

Genauer gesagt weist die Handwerkerausstattung 104 eine Vielzahl von Token 100 aus, die zum Beispiel alle in gleicher Weise geformt und dimensioniert sein können. In Figur 1 sind nur zwei solche Token 100 dargestellt, jedoch ist eine viel größere Anzahl von Token 100 in einer Handwerkerausstattung 104 möglich (zum Beispiel mindestens zehn, insbesondere mindestens hundert).

Darüber hinaus ist in der Handwerkerausstattung 104 eine Mehrzahl von Handwerkergeräten 102 vorgesehen. In Figur 1 sind nur zwei solche Handwerkergeräte 102 dargestellt, jedoch ist eine viel größere Anzahl von Handwerkergeräten 102 in einer Handwerkerausstattung 104 möglich (zum Beispiel mindestens zehn, insbesondere mindestens hundert). Ein Teil oder alle der Handwerkergeräte 102 können eine identisch geformte und dimensionierte mechanische Aufnahmeeinrichtung 152 aufweisen, hier ausgebildet als Einsteck- oder Aufnahmeöffnung, die zum mechanischen Koppeln mit einer jeweiligen mechanischen Kopplungseinrichtung 110 eines beliebigen, benutzerseitig ausgewählten der Token 100 ausgebildet ist. Zwischen jeder mechanischen Kopplungseinrichtung 110 jedes Token 100 und jeder mechanischen Aufnahmeeinrichtung 152 jedes Handwerkergeräts 102 kann durch Zusammenstecken eine formschlüssige Verbindung ausgebildet werden.

Wenn eine mechanische Verbindung zwischen einem Token 100 und einem ausgewählten Handwerkergerät 102 ausgebildet ist, indem die mechanische Kopplungseinrichtung 110 des Token 100 in die Aufnahmeeinrichtung 152 des ausgewählten Handwerkergeräts 102 eingesteckt wird, wird simultan eine Wirk- oder Kommunikationsverbindung zwischen Token 100 und Handwerkergerät 102 ausgebildet. Genauer gesagt wird in dem dargestellten Ausführungsbeispiel eine elektrische Verbindung zwischen einem oder mehreren elektrischen Kontakten 156 an einer Außenseite jedes Token 100 und einem oder mehreren elektrischen Gegenkontakten 136 an einer Innenseite jeder Aufnahmeeinrichtung 152 jedes Handwerkergeräts 102 ausgebildet. Das Ausbilden eines Formschlusses zwischen einem jeweiligen Token 100 und einer jeweiligen Aufnahmeeinrichtung 152 eines Handwerkergeräts 102 führt somit zum Ausbilden eines elektrischen Kontakts und somit einer elektrisch leitfähigen Verbindung zwischen dem Token 100 und diesem Handwerkergerät 102. Durch diese elektrische Verbindung ist auch eine elektrische Kommunikationsverbindung zwischen dem Token 100 und dem Handwerkergerät 102 ausgebildet, die insbesondere die Übermittlung elektrischer Signale (beispielsweise Steuersignale) ermöglicht. Alternativ zu dieser kontaktbehafteten elektrischen Kopplung kann eine drahtlose bzw. kontaktlose Kommunikationsverbindung zwischen einem Token 100 und einem Handwerkergerät 102 ausgebildet werden, indem durch Einführen des Token 100 in die Aufnahmeeinrichtung 152 ein Transponder (zum Beispiel ein RFID-Tag, nicht gezeigt) des Token 100 in einen Lesbarkeitsabstand eines Transponder-Lesegeräts (zum Beispiel ein RFID-Lesegerät, nicht gezeigt) des Handwerkergeräts 102 gebracht wird (nicht dargestellt).

Vorteilhaft ist ein Token 100, wenn dieser durch Einführen in die Aufnahmeeinrichtung 152 eines Handwerkergeräts 102 in Kommunikationsverbindung mit dem Handwerkergerät 102 gebracht worden ist, zum Steuern von diesem Handwerkergerät 102 ausgebildet. Ein Betrieb des Handwerkergeräts 102 in einem Zustand ohne Kopplung mit dem Token 100 kann unterbunden sein. Anders ausgedrückt kann erst durch eine erfolgreiche Kopplung von Token 100 und Handwerkergerät 103 dessen Benutzung freigegeben werden.

Indem jeder Token 100 wahlweise mit jeder mechanischen Aufnahmeeinrichtung 152 eines ausgewählten Handwerkergeräts 102 gekoppelt werden kann, ist ein flexibel kombinierbares, modulares System zum Betrieb, zur Steuerung und/oder zum Verwalten von Handwerkergeräten 102 in einer komplexen Handwerkerausrüstung 100 geschaffen.

In Figur 1 sind die Handwerkergeräte 102 nur teilweise und nur schematisch dargestellt. Beispielsweise kann ein erster Teil der Handwerkergeräte 102 als elektrische oder motorische Handgeräte ausgebildet sein, zum Beispiel als elektrische Bohrmaschinen, elektrische Akkuschrauber, etc. Als elektrische oder motorische Handgeräte ausgebildete Handwerkergeräte 102 können zum Beispiel eine Funktionseinrichtung 134 aufweisen, welche die eigentliche Funktion des jeweiligen Handgeräts ausführt und mittels eines elektrischen oder motorischen Antriebs angetrieben werden kann. Bei einem als Bohrmaschine ausgebildeten Handwerkergerät 102 kann die Funktionseinrichtung 134 zum Beispiel ein Bohrfutter (insbesondere mit Bohrer) sein. Bei einem als Akku-Schrauber ausgebildeten Handwerkergerät 102 kann die Funktionseinrichtung 134 zum Beispiel eine Bitaufnahme (insbesondere mit Bit) sein. Ferner kann ein Handgerät eine Energieversorgungseinrichtung 142 aufweisen, zum Beispiel einen abnehmbaren und wiederaufladbaren Akku-Block. Eine solche Energieversorgungseinrichtung 142 kann im Betrieb die Funktionseinrichtung 134 mit elektrischer Antriebsenergie versorgen. Alternativ oder ergänzend kann die Energieversorgungseinrichtung 142 auch ein Token 100 mit elektrischer Energie versorgen, wenn dieser in der Aufnahmeeinrichtung 152 aufgenommen ist. Auch kann ein Handgerät eine Steuereinrichtung 138 aufweisen, die zum Steuern des Handgeräts (zum Beispiel, wenn ein Handgerät mit keinem Token 100 gekoppelt ist) und/oder zum Zusammenwirken mit einem Prozessor 106 eines gekoppelten Token 100 ausgebildet sein kann.

Ein zweiter Teil (nicht gezeigt) der Handwerkergeräte 102 kann als (insbesondere nichtelektrische oder nichtmotorische) Werkzeuge bzw. Werkzeugsätze ausgebildet sein, zum Beispiel als Schraubendreher, Bohrer oder Bohrerbox, Bit oder Bitbox, etc.

Ein dritter Teil (nicht gezeigt) der Handwerkergeräte 102 kann als Bevorratungssysteme zum Bevorraten von Handgeräten, Werkzeugen und Verbrauchsgut ausgebildet sein. Beispiele für solche Bevorratungssysteme sind Kästen, Koffer, Schubladen und/oder Regale zum Aufnehmen bzw. Bevorraten von Handgeräten, Werkzeug und/oder Verbrauchsgut.

Ein vierter Teil (nicht gezeigt) der Handwerkergeräte 102 kann als Verbrauchsgut ausgebildet sein, beispielsweise Kartons mit Schrauben oder Dübeln, oder als Bolzenanker.

Ein fünfter Teil (nicht gezeigt) der Handwerkergeräte 102 kann als motorisch angetriebene Fahrzeuge ausgebildet sein, zum Beispiel als PKWs oder LKWs, Gabelstapler und/oder als Bagger, wie sie beim Durchführen von Handwerksaufgaben zum Einsatz kommen. Auch mit Muskelkraft angetriebene nichtmotorische Fahrzeuge, wie ein schiebbarer Werkzeugwagen, können eingesetzt werden.

Ein sechster Teil (nicht gezeigt) der Handwerkergeräte 102 kann als sonstige Hilfsmittel und Gerätschaften der Handwerkerausstattung 104 ausgebildet sein, beispielsweise als Leitern, Gerüste, etc.

Ein Teil oder jeder der beschriebenen Handwerkergeräte 102 kann vorübergehend oder dauerhaft mit einem Token 100 ausgerüstet werden.

Vorteilhaft sind die Handwerkergeräte 102 zum Koppeln mit den Token 100 derart ausgebildet, dass eine Benutzung eines mit einem Token 100 gekoppelten Handwerkergeräts 102 durch einen Benutzer basierend auf einem personalisierten Berechtigungsprofil zugelassen, eingestellt und/oder unterbunden werden kann. Genauer gesagt kann einem Benutzer eines Token 100 ein Benutzerprofil zugewiesen sein, das Informationen in Hinblick auf eine Befähigung und Berechtigung dieses Benutzers zur Benutzung bestimmter Handwerkergeräte 102 beinhalten kann, aber auch Benutzungseinschränkungen und/oder Benutzungsverbote hinsichtlich bestimmter Handwerkergeräte 102 definieren kann. Ein solches Benutzerprofil kann in einer Speichereinrichtung 128 eines Token 100, in einer Speichereinrichtung 140 eines Handwerkergeräts 102 und/oder in einer Datenbank 132 eines mit dem Token 100 über ein Kommunikationsnetzwerk 120 kommunizierfähig gekoppelten Knoten (in dem dargestellten Ausführungsbeispiel eine zentrale Steuereinrichtung 124, alternativ ein anderer Knoten) gespeichert sein.

Im Weiteren wird exemplarisch der Aufbau des Token 100 näher beschrieben, der in Figur 1 im Detail dargestellt ist. Besagter Token 100 dient zum Beispiel zum benutzerbezogenen Steuern eines auswählbaren der Handwerkergeräte 102 der Handwerkerausstattung 104 und weist zu diesem Zweck einen Prozessor 106 auf. Zum Beispiel kann der Prozessor 106 im Inneren des Token 100 eingebettet sein und dadurch geschützt sein. Der Prozessor 106 kann zum Beispiel als Mikroprozessor ausgebildet sein. Es ist möglich, den Prozessor 106 als einen Teil einer Prozessoreinheit, als gesamte Prozessoreinheit oder als Mehrzahl von zusammenwirkenden Prozessoreinheiten auszubilden. Der Prozessor 106 des Token 100 dient zum steuerungstechnischen Zusammenwirken mit unterschiedlichen Handwerkergeräten 102 der Handwerkerausstattung 104, und wirkt insbesondere funktional mit einem ausgewählten Handwerkergerät 102 zusammen, in dessen Aufnahmeeinrichtung 152 der Token 100 eingeführt ist.

Ferner enthält der Token 100 eine Kryptographieeinheit 108, die ein kryptografisches Kommunizieren des Token 100 unterstützt. Genauer gesagt kann mittels der Kryptographieeinheit 108 eine Kommunikation des Token 100 mit einem Kommunikationspartnergerät in dem Kommunikationsnetzwerk 120 verschlüsselt erfolgen. Beispielsweise kann eine solche, von der Kryptographieeinheit 108 unterstützte verschlüsselte Kommunikation zwischen dem Token 100 einerseits und andererseits einer zentralen Steuereinrichtung 124, einem Benutzerendgerät 122 und/oder einer Nachbestelleinrichtung 126 erfolgen. Die verschlüsselte Kommunikation erhöht die Datensicherheit bei der Kommunikation über das Kommunikationsnetzwerk 120. Optional ist es auch möglich, mittels der Kryptographieeinheit 108 eine verschlüsselte Kommunikation zwischen dem Token 100 und einem mit diesem mechanisch gekoppelten Handwerkergerät 102 durchzuführen, beispielsweise bei der Übermittlung von Steuersignalen von dem Token 100 an ein als Handgerät ausgebildetes Handwerkergerät 102. Dies führt zu einer sicheren Steuerung eines jeweiligen Handwerkergeräts 102, da ein Hackerangriff oder eine unbefugte Steuerung von außen dadurch unterbunden werden kann.

Wie bereits angesprochen, weist der Token 100 die mechanische Kopplungseinrichtung 110 auf, die zum vorzugsweise formschlüssigen mechanischen Koppeln mit einer Aufnahmeeinrichtung 152 von einem jeweiligen von unterschiedlichen Handwerkergeräten 102 der Handwerkerausstattung 104 ausgebildet ist. Die mechanische Kopplungseinrichtung 110 des Token 100 ist durch dessen äußere Formgebung definiert, die invers zur inneren Formgebung einer Aufnahmeeinrichtung 152 eines jeweiligen Handwerkergeräts 102 gestaltet ist.

Mit Vorteil kann der Token 100 ausgebildet sein, bei mechanischem Koppeln der mechanischen Kopplungseinrichtung 110 mit einer Aufnahmeeinrichtung 152 eines ausgewählten Handwerkergeräts 102 mittels des Prozessors 106 (und optional der Kryptographieeinheit 108 unter Einsatz kryptografischer Kommunikation) den Betrieb des besagten Handwerkergeräts 102 zu steuern. Genauer gesagt kann der Prozessor 106 des Token 100 das Handwerkergerät 102 und insbesondere dessen Funktionseinrichtung 134 so steuern, dass die gewünschte Bearbeitungsaufgabe durch das Handwerkergerät 102 bestimmungsgemäß durchgeführt wird. Beispielsweise kann der Prozessor 106 des Token 100 vorgeben, welches Drehmoment von einem Bohrer eines als Bohrmaschine ausgebildeten Handwerkergeräts 102 auf einen Untergrund aufgebracht wird, in dem ein Bohrloch gebohrt werden soll.

Mit Vorteil kann der Token 100 zum benutzerbezogenen Steuern des Handwerkergeräts 102 ausgebildet sein, insbesondere auf Basis eines personalisierten Berechtigungsprofils des Benutzers. Zu diesem Zweck kann der Token 100 mit einer Identifizierungseinrichtung 170 versehen sein, die zum Identifizieren eines Benutzers des Token 100 ausgebildet ist. Die Identifizierungseinrichtung 170 ist durch einen zum Beispiel als Fingerprintsensor ausgebildeten Sensor 112 und den Teil des Prozessors 106 gebildet, der aus mittels des Sensors 112 ermittelten Sensordaten den Benutzer identifiziert, beispielsweise durch einen Musterabgleich mit Referenzdaten. Genauer gesagt ist der Sensor 112 zum Beispiel als Fingerprintsensor ausgebildet, auf den ein Benutzer zum Identifizieren einen Finger auflegt. Vorteilhaft kann der Sensor 112 daher in einem Oberflächenbereich des Token 100 angebracht sein. Der Sensor 112 kann dann ermitteln, ob die von dem Sensor 112 erfassten Daten anzeigen, dass es sich bei dem Benutzer um einen berechtigten oder autorisierten Benutzer handelt bzw. um welchen Benutzer es sich handelt. Diese Ermittlung kann durch Vergleich der sensorisch erfassten Daten mit Sensor-Referenzdaten (zum Beispiel einem in einer Datenbank hinterlegten Fingerabdruck eines autorisierten Benutzers) durchgeführt werden.

Die bereits angesprochene Speichereinrichtung 128 des Token 100 kann Informationen speichern, die für ein personalisiertes Berechtigungsprofil des Benutzers in Bezug auf das Handwerkergerät 102 indikativ sind oder einen Zugang hierzu gewähren. Genauer ausgedrückt kann in der Speichereinrichtung 128 des Token 100 ein Datensatz gespeichert sein, der ein Berechtigungsprofil eines Benutzers (oder mehrere Berechtigungsprofile mehrerer Benutzer) darstellt oder abbildet. Es ist allerdings auch möglich, dass das Berechtigungsprofil von einem oder mehreren Benutzern in einer in Bezug auf den Token 100 entfernt angeordneten Entität gespeichert ist, zum Beispiel in einer zentralen Datenbank 132 einer zentralen Steuereinrichtung 124, über die der Token 100 mittels des Kommunikationsnetzwerks 120 kommunizierfähig gekoppelt sein kann. Zum Zugriff auf ein Berechtigungsprofil eines Benutzers kann es dann ausreichend sein, in dem Token 100 Zugriffsinformationen (zum Beispiel einen Link auf die zentrale Datenbank 132, gegebenenfalls in Kombination mit einem Passwort) zum Zugriff auf das entfernt gespeicherte Berechtigungsprofil zu speichern.

Der Prozessor 106 kann ausgebildet sein, den Betrieb des mit dem Token 100 gekoppelten Handwerkergeräts 102 in Einklang mit dem Benutzerberechtigungsprofil des Benutzers des Token 100 zu steuern. Insbesondere kann der Prozessor 106 ausgebildet sein, den Betrieb des mit dem Token 100 gekoppelten Handwerkergeräts 102 nur dann freizugeben, wenn eine mittels des Token 100 vorab durchgeführte Benutzeridentifizierung zu dem Ergebnis geführt hat, dass ein sich identifizierender Benutzer zum Betrieb des Handwerkergeräts 102 autorisiert ist. Mit Vorteil kann der Prozessor 106 des Token 100 also ausgebildet sein, bei Koppeln mit dem Handwerkergerät 102 eine Benutzung des Handwerkergeräts 102 durch den Benutzer basierend auf dem personalisierten Berechtigungsprofil zuzulassen, einzustellen und/oder zu unterbinden. Beispielsweise kann eine von einem Benutzer gewünschte Bearbeitungsaufgabe unter Verwendung eines Handwerkergeräts 102 nur für bestimmte Benutzer zugelassen sein, zum Beispiel wenn der Benutzer eine bestimmte Einweisung erhalten hat oder eine besondere Qualifizierung (zum Beispiel einen Führerschein) zur Benutzung des Handwerkergeräts 102 erhalten hat. Erfüllt das Berechtigungsprofil des Benutzers eine solche Bedingung nicht, kann die Benutzung des Handwerkergeräts 102 durch den Prozessor 106 des Token 100 unterbunden werden. Erfüllt indes das Berechtigungsprofil des Benutzers eine solche Bedingung, kann die Benutzung des Handwerkergeräts 102 durch den Prozessor 106 des Token 100 zugelassen werden. Sind aufgrund eines Berechtigungsprofils bestimmte Bearbeitungsaufgaben für einen Benutzer nur eingeschränkt zugelassen, wird die Benutzung des Handwerkergeräts 102 durch den Benutzer nur zugelassen, wenn eine zugehörige Bedingung erfüllt ist. Beispielsweise kann die Benutzung eines Handwerkergeräts 102 durch einen Benutzer nur dann zugelassen sein, wenn dieser eine Schutzausrüstung (zum Beispiel eine Schutzbrille) trägt. Ist eine solche Schutzausrüstung ebenfalls mit einem Token 100 ersehen, kann der Prozessor 106 nach einem kommunizierfähig gekoppelten und eine Schutzausrüstung anzeigenden Token 100 suchen, und die gewünschte Bearbeitungsaufgabe durch einen Benutzer erst dann zulassen, wenn die Anwesenheit einer Schutzausrüstung durch die Anwesenheit einen solchen Token 100 erkannt worden ist.

Wie in Figur 1 dargestellt, kann die Handwerkerausstattung 104 eine Token-Anordnung 130 aus einer Mehrzahl von Token 100 aufweisen, wobei unterschiedliche der Token 100 unterschiedliche Grade an Funktionalität aufweisen. Beispielsweise können die Token 100 einer Handwerkerausstattung 104 in Token 100 einer ersten, zweiten und dritten Generation unterteilt werden. Jeder Token 100 einer beliebigen Generation kann dabei die Grundfunktion eines Token 100 erfüllen, wie oben beschrieben. Token 100 höherer Generationen können darüber hinaus Zusatzfunktionen und/oder Zusatzkomfort aufweisen, unterstützen aber auch die Grundfunktion eines Token 100 der niedrigsten Generation. Token 100 aller Generationen können die gleiche Form haben und können zum Einsatz mit beliebigen Handwerkergeräten 102 der Handwerkerausstattung 104 verwendet werden. Anders ausgedrückt ist die Token-Anordnung 130 hinsichtlich unterschiedlicher Generationen von Token 100 kompatibel. Die Handwerkergeräte 102 bedürfen keiner Anpassung in Hinblick auf ihr Zusammenwirken mit einem Token 100 einer jeweiligen Generation, außer dass eine Aufnahmeeinrichtung 152 zum mechanischen Aufnehmen eines zugehörigen Token 100 vorgesehen wird.

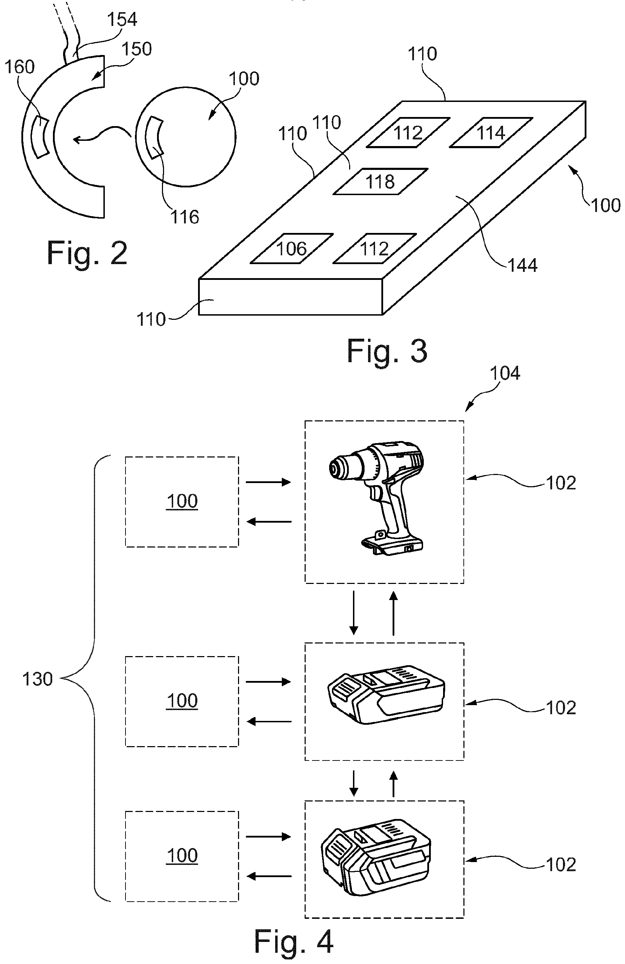

Jeder der eingesetzten Token 100 kann zum Beispiel als Steckelement zum Einstecken in eine Aufnahmeöffnung eines Handwerkergeräts 102 ausgebildet sein. Zum Beispiel kann jeder Token 100 als Kreisscheibe mit einem Durchmesser in einem Bereich von 2 cm bis 4 cm ausgebildet sein und ist daher von einem Benutzer bequem handhabbar und platzsparend in ein Handwerkergerät 102 einführbar. Andere Formen eines Token 100 sind möglich, siehe zum Beispiel Figur 3. Ferner ist die mechanische Kopplungseinrichtung 110 jedes Token 100 ausgebildet, den Token 100 mit dem Handwerkergerät 102 abnehmbar zu koppeln. Somit kann ein Benutzer einen (ihm beispielsweise zugeordneten) Token 100 nacheinander in Kombination mit unterschiedlichen Handwerkergeräten 102 einsetzen, wobei die Auswahl eines adressierten Handwerkergeräts 102 durch bloßes mechanisches Einführen der mechanischen Kopplungseinrichtung 110 des Token 100 in eine zugehörige Aufnahmeeinrichtung 152 eines Ziel-Handwerkergeräts 102 erfolgen kann. Somit dient die mechanische Kopplungseinrichtung 110 eines Token 100 als für unterschiedliche Handwerkergeräte 102 universelle elektromechanische Schnittstelle.

Wie bereits angesprochen, kann der Token 100 einen oder mehrere Sensoren 112 aufweisen, unter anderem den oben beschriebenen Benutzeridentifizierungssensor. Es ist alternativ oder ergänzend möglich, den Token 100 zum Beispiel mit einem Gyrosensor, einem Ortsbestimmungssensor und/oder einem Temperatursensor auszurüsten. Ein Gyrosensor kann etwa erkennen, wenn ein Handwerkergerät 102 mit darin aufgenommenem Token 100 herunterfällt und folglich einer Erschütterung ausgesetzt ist. Das Handwerkergerät 102 kann in diesem Fall vorsorglich ausgeschaltet werden, um Verletzungen eines Benutzers und Beschädigungen zu vermeiden. Ein Ortsbestimmungssensor (zum Beispiel ein GPS-Sensor) des Token 100 erlaubt die Erkennung einer aktuellen Position des Token 100 samt Handwerkergerät 102. Die Verwendung eines Handwerkergeräts 102 kann (zum Beispiel in einem Benutzerprofil) auf einen bestimmten Raumbereich (beispielsweise eine bestimmte Baustelle) eingeschränkt sein, zum Beispiel um Missbrauch zu vermeiden. Erkennt ein Ortsbestimmungssensor, dass sich ein Handwerkergerät 102 samt Token 100 an einem zur Verwendung nicht zugelassenen Ort befindet, kann der Prozessor 106 des Token 100 das Handwerkergerät 102 zur Vermeidung von Missbrauch ausschalten oder deaktivieren. Ein Temperatursensor des Token 100 kann die Umgebungstemperatur erfassen. Ist eine Bearbeitungsaufgabe (zum Beispiel das Setzen eines chemischen Dübels) nur unter bestimmten Temperaturbedingungen erlaubt, kann aus Sicherheitsgründen ein Betrieb des Handwerkergeräts 102 verunmöglicht werden, wenn eine Temperaturbedingung angesichts erfasster Temperatursensordaten nicht erfüllt ist.

Optional weist der Token 100 eine Energieversorgungseinrichtung 116 auf, zum Beispiel eine auswechselbare Batterie oder einen wiederaufladbaren Akku. Dann kann der Token 100 autonom betrieben werden. Alternativ oder ergänzend kann der Token 100 von einer Energieversorgungseinrichtung 142 eines Handwerkergeräts 102 mit elektrischer Energie versorgt werden, wenn der Token 100 in der Aufnahmeeinrichtung 152 aufgenommen ist.

Figur 1 zeigt weiter, dass der Token 100 eine Kommunikationsantenne 114 aufweisen kann, beispielsweise eine WLAN-Antenne. Es ist auch möglich und aus Gründen der Diversität vorteilhaft, wenn das Token 100 mehrere Kommunikationsantennen 114 aufweist, die zum Beispiel unterschiedliche Kommunikationsprotokolle unterstützen. Beispielsweise kann eine Kommunikationsantenne 114 in Form einer ebenen Spule realisiert sein, die vorzugsweise in einem Oberflächenbereich des Token 100 angeordnet ist. Eine Kommunikationsantenne 114 kann als Sende-/Empfangs-Antenne ausgebildet sein. Es ist auch möglich, eine Sendeantenne und eine separate Empfangsantenne vorzusehen, oder nur eine dieser Antennen.

Zudem weist der in Figur 1 dargestellte Token 100 eine Kommunikationseinrichtung 118 auf, die durch ein Zusammenwirken der Kommunikationsantenne 114 mit einem entsprechenden Teil des Prozessors 106 und optional mit der Kryptographieeinheit 108 gebildet sein kann. Die Kommunikationseinrichtung 118 dient zum Kommunizieren des Token 100 mit einem oder mehreren Kommunikationsknoten über das Kommunikationsnetzwerk 120. Dieses kann zum Beispiel das öffentliche Internet, ein Intranet oder ein Mobilfunknetzwerk sein.

Zum Beispiel kann der Token 100 über das Kommunikationsnetzwerk 120 - oder direkt - mit einem anderen Token 100 der Handwerkerausstattung 104 kommunizieren. Dies kann zum Beispiel zu dem Zweck erfolgen, die Anwesenheit einer mit einem Token 100 ausgerüsteten Schutzausrüstung zu erkennen (was aus Gründen der Arbeitssicherheit zur Bedingung für die Freigabe zur Benutzung eines Handwerkergeräts 102 gemacht werden kann).

Alternativ oder ergänzend ist es möglich, über das Kommunikationsnetzwerk 120 eine kommunizierfähige Kopplung zwischen dem Token 100 und einer auf einem portablen Benutzerendgerät 122 gespeicherten App oder sonstigen Software auszubilden. Im dargestellten Ausführungsbeispiel ist das Benutzerendgerät 122 ein Mobilfunkgerät mit einer Benutzeroberfläche, mit welcher ein Benutzer den kommunizierfähig gekoppelten Token 100 und/oder ein damit gekoppeltes Handwerkergerät 102 steuern und/oder überwachen kann. Mittels des Benutzerendgeräts 122 kann ein Benutzer auch von entfernter Position aus die Handwerkerausstattung 104 steuern und/oder überwachen. Beispielsweise kann sich ein Token 100 über eine App mit dem hier als Mobilfunkgerät ausgebildeten Benutzerendgerät 122 verbinden. Mittels des Benutzerendgeräts 122 können Daten auf den Token 100 heruntergeladen werden, beispielsweise ein Benutzerprofil eines Benutzers des Benutzerendgeräts 122. Ferner ist es möglich, dass der Token 100 im Betrieb auf Ressourcen des Benutzerendgerät 122 zugreift, beispielsweise auf einen darin enthaltenen Prozessor und/oder auf eine Kamera des Benutzerendgeräts 122.

Beispielsweise kann eine in dem Benutzerendgerät 122 enthaltene Kamera verwendet werden, um ein Bild von einer Produktverpackung aufzunehmen, das einen Rückschluss auf ein für eine Bearbeitungsaufgabe verwendetes Verbrauchsmaterial (zum Beispiel eine Schraubenart) ermöglicht. Diese Information kann von dem Benutzerendgerät 122 zu dem Token 100 übermittelt werden, sodass die Steuerung eines Beispiel als Akku-Schrauber ausgebildeten Handwerkergeräts 102 zum Setzen einer entsprechenden Schraube durch den Token 100 entsprechend durchgeführt werden kann. Allgemeiner ausgedrückt kann zum Beispiel an dem Token 100 und/oder an dem Benutzerendgerät 122 eine optische Detektionseinrichtung, insbesondere eine Kamera, vorgesehen sein, die zum Detektieren einer für eine mittels des Handwerkergeräts 102 auszuführenden Bearbeitungsaufgabe indikativen Bearbeitungsinformation ausgebildet ist. Vorteilhaft kann der Prozessor 106 zum Ausführen der Bearbeitungsaufgabe unter Verwendung der detektierten Bearbeitungsinformation ausgebildet sein.

Alternativ oder ergänzend ist es möglich, über das Kommunikationsnetzwerk 120 eine kommunizierfähige Kopplung zwischen dem Token 100 und einer zentralen Steuereinrichtung 124 (zum Beispiel zum Steuern mehrerer Handwerkergeräte 102) auszubilden. Die zentrale Steuereinrichtung 124 kann mit einem Zugriffsrecht auf eine Datenbank 132 ausgestattet sein, aus der Datensätze an den Token 100 übermittelt werden können. Solche Datensätze können zum Beispiel ein von dem Token 100 angefordertes Benutzerprofil, ein Betriebsdatensatz zum Ausführen einer Bearbeitungsaufgabe mit einem mit dem Token 100 mechanisch gekoppelten Handwerkergerät 102, etc. Somit kann der Token 100 ausgebildet sein, mittels der Kommunikationseinrichtung 118 von der zentralen Steuereinrichtung 124 oder einem anderen kommunizierfähig gekoppelten Knoten des Kommunikationsnetzwerks 120 einen Datensatz herunterzuladen, insbesondere einen einen Betriebsablauf des Handwerkergeräts 102 definierenden Datensatz und/oder einen ein Benutzerprofil eines Benutzers des Token 100 definierenden Datensatz.

Ferner ist es möglich, durch die kommunizierfähige Kopplung zwischen dem Token 100 und der zentralen Steuereinrichtung 124 Daten von dem Token 100 an die Steuereinrichtung 124 zum Speichern in der Datenbank 132 zu übermitteln. Solche Daten können zum Beispiel Tracking-Daten sein, die ein Nachverfolgen eines mit einem jeweiligen Token 100 gekoppelten Handwerkergeräts 102 erlauben. Somit kann der Token 100 ausgebildet sein, mittels der Kommunikationseinrichtung 118 zu der Steuereinrichtung 124 oder einem anderen kommunizierfähig gekoppelten Knoten des Kommunikationsnetzwerks 120 einen Datensatz heraufzuladen, insbesondere einen Betriebsergebnisse und/oder Betriebsparameter eines Betriebs des Handwerkergeräts 102 enthaltenden Datensatz.

Schließlich ist es möglich, dass der Token 100 über das Kommunikationsnetzwerk 120 mit einer Nachbestelleinrichtung 126 zum Nachbestellen von Verbrauchsgütern zum Betrieb eines Handwerkergeräts 102 gekoppelt ist. Erkennt ein Token 100 (beispielsweise mittels eines Tokeneigenen, beispielsweise optischen, Sensors 112 und/oder mittels eines Kamerabilds des Benutzerendgeräts 122), dass ein Restbestand eines bestimmten Verbrauchsguts (zum Beispiel einer bestimmten Art von Schrauben zum Setzen in einen Untergrund mittels eines als Akkuschrauber ausgebildeten Handwerkergeräts 102, in das der Token 100 eingeführt ist) unter einen kritischen Schwellwert abgesunken ist, kann der Token 100 über das Kommunikationsnetzwerk 120 die Nachbestelleinrichtung 126 entsprechend informieren und dadurch eine Nachbestellung dieses Verbrauchsguts auslösen bzw. triggern. Die Nachbestelleinrichtung 126 kann ein Computer sein, der seinerseits über das Kommunikationsnetzwerk 120 mit Lieferanten-Knoten gekoppelt sein kann, um die Nachbestellung auszuführen. Ein Nachbestellen von Verbrauchsgütern kann also von einem Token 100 ausgelöst werden, zum Beispiel wenn mittels des Token 100 und/oder eines Handwerkergeräts 102 zum Beispiel sensorisch erfasst worden ist, dass ein Restbestand von bestimmten Verbrauchsgütern unter einen vorgegebenen Schwellwert abgesunken ist.

Im Betrieb der Handwerkerausstattung 100 kann zum benutzerbezogenen Steuern eines Handwerkergeräts 102 mittels eines Token 100 zunächst ein Identifizieren eines Benutzers des Token 100 mittels des als Fingerprintsensor ausgebildeten Sensors 112 erfolgen. Danach kann ein mechanisches Koppeln der mechanischen Kopplungseinrichtung 110 des Token 100 mit der mechanischen Verbindungseinrichtung 152 des ausgewählten Handwerkergeräts 102 erfolgen. Vor oder nach dem mechanischen Koppeln kann ein personalisiertes Berechtigungsprofil des Benutzers des Token 100 aufgefunden werden, beispielsweise in einer der Speichereinrichtungen 128, 140. Nach erfolgtem mechanischen Koppeln kann ein Steuern des Handwerkergeräts 102 mittels des Prozessors 106 durchgeführt werden. Hierbei kann mit Vorteil eine Benutzung des Handwerkergeräts 102 durch den Benutzer basierend auf dem personalisierten Berechtigungsprofil zugelassen, unterbunden und/oder eingestellt werden. Insbesondere kann der Prozessor 106 ausgebildet sein, den Betrieb des mit dem Token 100 gekoppelten Handwerkergeräts 102 nur dann freizugeben, wenn eine mittels des Token 100 vorab durchgeführte Benutzeridentifizierung zu dem Ergebnis geführt hat, dass ein sich identifizierender Benutzer für den Betrieb des Handwerkergeräts 102 berechtigt ist. Hierbei kann das personalisierte Berechtigungsprofil zumindest eine Information aus einer Gruppe aufweisen, die besteht aus einem auf eine Benutzerqualifikation und/oder auf ein körperliches (zum Beispiel eine körperliche Einschränkung) oder biologisches (zum Beispiel ein fortgeschrittenes Alter) Benutzermerkmal bezogenes Benutzungsverbot für mindestens einen definierten Betriebsmodus des Handwerkergeräts 102, einer benutzerspezifischen Benutzungserlaubnis für mindestens einen definierten Betriebsmodus des Handwerkergeräts 102, und einer zum Beispiel arbeitsschutzbezogenen Benutzungsbedingung für die Benutzung des Handwerkergeräts 102. Beispielsweise kann das Berechtigungsprofil für einen bestimmten Benutzer die Information beinhalten, dass der Benutzer aufgrund seiner körperlichen Konstitution (beispielsweise aufgrund seines Lebensalters, seiner Größe und/oder seines Gewichts) nur zur Verwendung von Handwerkergeräten 102 bis zu einem bestimmten Gewicht (beispielsweise bis zu 20 kg) befähigt ist. Ferner kann in einem solchen Berechtigungsprofil für einen bestimmten Benutzer hinterlegt sein, für welche Handwerkergeräte 102 der Benutzer betriebsberechtigt ist (zum Beispiel kann die Benutzung eines Gabelstaplers einem Benutzer nur erlaubt werden, wenn dieser einen Gabelstapler-Führerschein hat). Ferner kann für einen bestimmten Benutzer und/oder für ein bestimmtes Handwerkergerät 102 in einem Benutzerprofil hinterlegt werden, welche Arbeitsschutzausrüstung (zum Beispiel Arbeitsschutzkittel, Ohrenschützer, Schutzbrille) von einem Benutzer zu tragen ist, um ein bestimmtes Handwerkergerät 102 benutzen zu dürfen. Die Verwendung eines Handwerkergeräts 102 kann einem Benutzer von dem Token 100 so lange verweigert werden, bis die Arbeitsschutzausrüstung an diesem Benutzer (beispielsweise sensorisch) erkannt worden ist. Beispielsweise kann auch die Arbeitsschutzausrüstung mit einem entsprechenden Token 100 ausgestattet sein, sodass durch Token-Token-Kommunikation das Vorliegen von Arbeitsschutzausrüstung an dem Benutzer nachgewiesen werden kann.

Der Prozessor 106 kann ausgebildet sein, bei Koppeln mit dem Handwerkergerät 102 basierend auf dem personalisierten Berechtigungsprofil ein Herunterladen eines Datensatzes (zum Beispiel ein Datenblatt), insbesondere eines einen Betriebsablauf des Handwerkergeräts 102 definierenden Datensatzes, aus einem Kommunikationsnetzwerk 120 zuzulassen oder zu unterbinden. Beispielsweise kann ein optischer Sensor (insbesondere eine Kamera) des Token 100 und/oder an einem Handwerkergerät 102 eine Produktpackung mit Schrauben scannen, die in einer Betriebsart des Handwerkergeräts 102 in einem Untergrund (beispielsweise einer vertikalen Betonwand) gesetzt werden soll. Auf diese Weise kann zum Beispiel sensorisch erkannt werden, dass es sich bei den Schrauben um M8 Schrauben handelt. Der Token 100 kann dann einen Download einer Produktspezifikation (als einen Betriebsablauf definierender Datensatz) entsprechend der sensorisch erfassten Produktpackung durchführen oder initiieren. Auf Basis des heruntergeladenen Datensatzes kann dann die Ausführung der Bearbeitungsaufgabe fehlerfrei erfolgen, und zwar durch eine Steuerung des Handwerkergeräts 102 durch den Token 100 unter Verwendung des heruntergeladenen Datensatzes.

**Figur 2** zeigt einen Token 100 mit einer zugehörigen Aufbewahrungs- und Wiederaufladevorrichtung gemäß einem exemplarischen Ausführungsbeispiel der Erfindung.

Genauer gesagt weist die in Figur 2 dargestellte Token-Anordnung den Token 100 und eine Token-Aufnahme 150 auf, die zum formschlüssigen und/oder kraftschlüssigen Aufnehmen des Token 100 ausgebildet sein kann. Hierfür kann der Token 100 in einen Aufnahmeraum der Token-Aufnahme 150 eingeklemmt werden, der zwischen einander gegenüberliegenden elastischen Schenkeln der Token-Aufnahme 150 begrenzt ist. Auf diese Weise kann ein Benutzer den Token 100 mechanisch geschützt verwahren, zum Beispiel unter Verwendung eines Verbindungselements 154. Mittels des Verbindungselements 154 kann ein Benutzer die Token-Aufnahme 150, optional samt darin aufgenommenem Token 100, in fixierter Weise mit sich führen, beispielsweise an einer Gürtelschlaufe befestigen.

Es ist auch möglich, einen Token 100 mit ganz oder teilweise entleerter Energieversorgungseinrichtung 116 (beispielsweise einem wiederaufladbaren Akku) an der Token-Aufnahme 150 anzubringen und dadurch ein Wiederaufladen der Energieversorgungseinrichtung 116 auszulösen. Hierfür kann (zum Beispiel durch einen elektrischen Kontakt oder in induktiver Weise) elektrische Energie von einer Ladeeinrichtung 160 der Token-Aufnahme 150 in die Energieversorgungseinrichtung 116 des Token 100 transferiert werden.

**Figur 3** zeigt einen Token 100 gemäß einem exemplarischen Ausführungsbeispiel der Erfindung. Der Token 100 gemäß Figur 3 ist als rechteckförmiger Streifen ausgebildet, der intuitiv in eine invers geformte Aussparung im Inneren eines Handwerkergeräts 102 eingeführt werden kann.

**Figur 4** zeigt Komponenten einer Handwerkerausstattung 104 gemäß einem anderen exemplarischen Ausführungsbeispiel der Erfindung.

Die Handwerkerausstattung 104 gemäß Figur 4 enthält zum Beispiel drei Handwerkergeräte 102 und beispielsweise drei Token 100.

Die drei Handwerkergeräte 102 gemäß Figur 4 sind als Bohrmaschine (oben), Sensormodul (Mitte) und Batterie-Block (unten) ausgebildet und miteinander verbindbar. Im Betrieb versorgt der Batterie-Block die Bohrmaschine mit elektrischer Energie, während das Sensormodul Betriebsdaten der Bohrmaschine sensorisch erkennt (und diese beispielsweise als Basis für eine Steuerung verwendet). Zwischen Bohrmaschine und Sensormodul ist jeweils eine bidirektionale Signalkopplung (d.h. in Senderichtung und in Empfangsrichtung) ermöglicht, siehe die beiden Pfeile. In entsprechender Weise ist zwischen Sensormodul und Batterie-Block eine bidirektionale Signalkopplung ermöglicht.

Zwischen jedem der Handwerkergeräte 102 und einem jeweiligen der Token 100 ist ebenfalls eine bidirektionale Signalkopplung ermöglicht. Die Konfiguration gemäß Figur 4 zeigt, dass alle Komponenten 102, 100 gleichberechtigt miteinander kommunizieren können. Die Kommunikationsschnittstellen zwischen den Komponenten 102, 100 können zum Beispiel gemäß einem UART (Universal Asynchronous Receiver Transmitter) Protokoll ausgebildet sein.

Die dargestellten Token 100 können eine Token-Anordnung 130 aus Token 100 unterschiedlicher Grade von Funktionalität bilden, wobei jeder der Token 100 der Token-Anordnung 130 mit jedem beliebigen der Handwerkergeräte 102 mechanisch und funktional gekoppelt werden kann.

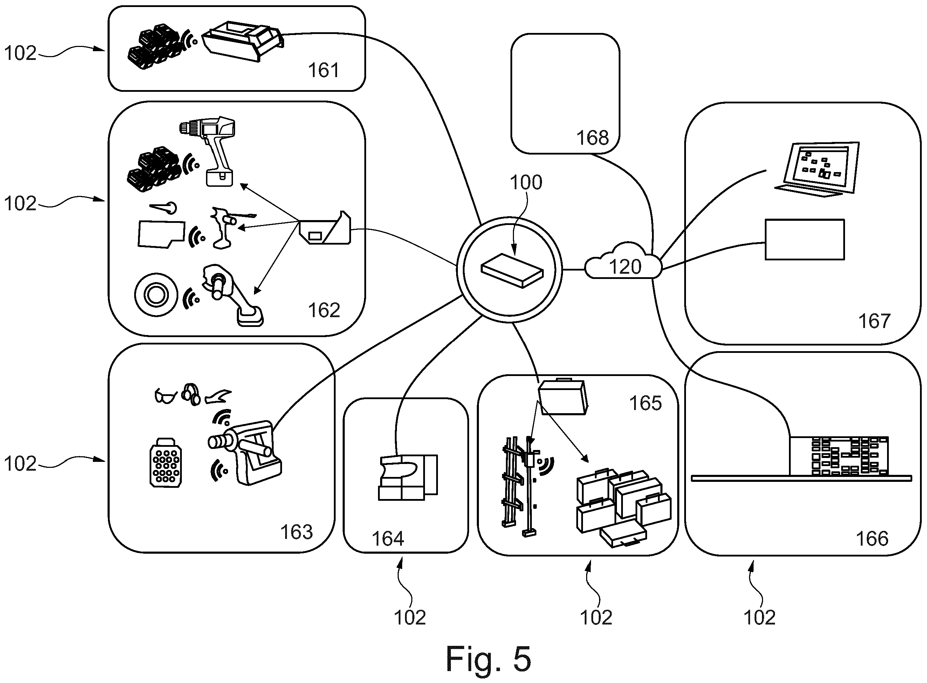

**Figur 5** zeigt eine Handwerkerausstattung 104 mit Handwerkergeräten 102 und einem Token 100 gemäß einem exemplarischen Ausführungsbeispiel der Erfindung, die in einem Kommunikationsnetzwerk 120 gekoppelt sind. Figur 5 zeigt eine modular ausgebildete Handwerkerausstattung 104 in einer Internet of Things (IoT)-Architektur.

Bezugszeichen 161 zeigt Adapter, Bezugszeichen 162 zeigt Handgeräte, Bezugszeichen 163 zeigt persönliche Schutzausrüstung und Wearables, Bezugszeichen 164 zeigt die Anwendung von Handwerkergeräten 164 einer dritten Partei, Bezugszeichen 165 zeigt Tracker-Elemente, Bezugszeichen 166 zeigt Bevorratungssysteme, Bezugszeichen 167 zeigt ein Warenbestandverwaltungssystem, und Bezugszeichen 168 zeigt einen Online-Shop. All diese Systeme können in die Token-gesteuerte Handwerkerausstattung 104 mit einbezogen werden.

Im Weiteren wird ein anderes Anwendungsbeispiel eines Token gemäß einem exemplarischen Ausführungsbeispiel der Erfindung beschrieben. Zu einer vorgegebenen Zeit (beispielsweise zu einer vorgegebenen Tageszeit, etwa am Feierabend) kann der Token Betriebsdaten zu einem Zielgerät oder in eine Speichereinrichtung (beispielsweise in eine Cloud, eine auf einem portablen Nutzer-Endgerät gespeicherte App, etc.) übertragen. Solche Betriebsdaten können zum Beispiel eine Information hinsichtlich eines identifizierten Nutzers des Token und/oder eines damit gekoppelten Handwerkergeräts enthalten. Ferner können solche Betriebsdaten die Information enthalten, dass mit besagtem Handwerkergerät an einem bestimmten Tag bestimmte Arbeitsschritte ausgeführt worden sind (insbesondere unter Hinzufügung von Zusatzinformationen wie Drehmoment, Drehzahl und/oder Uhrzeit).

Gemäß einem anderen Anwendungsbeispiel eines anderen exemplarischen Ausführungsbeispiels der Erfindung kann - insbesondere mittels eines Token - eine Kommunikation zwischen mehreren Geräten, insbesondere zwischen mehreren Handwerkergeräten, durchgeführt werden. Beispielsweise kann eine Kommunikation zwischen einem ersten Handwerkergerät (zum Beispiel einem Hauptgerät) und einem zweiten Handwerkergerät (zum Beispiel einem Nebengerät) durchgeführt werden. Zum Beispiel kann ein erstes Handwerkergerät (zum Beispiel eine Bohrmaschine) ein zweites Handwerkergerät (zum Beispiel einen Staubsauger) einschalten, wenn eine Bohraufgabe durchgeführt wird. In einem anderen Beispiel kann ein Kernbohrer mit einer Führungsschiene zum Führen des Kernbohrers kommunizieren, beispielsweise um aktuelle Ortsinformation zu übermitteln. Ferner ist es möglich, dass ein Roboter mit einem externen Gerät kommuniziert, beispielsweise zum Abgleichen oder Sicherstellen, ob sich der Roboter richtig im Raum positioniert hat.

Gemäß einem exemplarischen Ausführungsbeispiel der Erfindung ist es auch möglich, ein Token als Tracker in ein Handwerkergerät (zum Beispiel in ein Powertool, ein Akku-Gehäuse, etc.) zu implementieren. Dadurch kann eine Ortsbestimmung des Handwerkergeräts ermöglicht werden. Optional kann auch mindestens ein Sensor bzw. mindestens ein weiterer Sensor in den Token integriert werden, beispielsweise ein Temperatursensor und/oder ein Feuchtigkeitssensor.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Handwerkerausstattung (104) aufweisend:
einen Token (100) zum benutzerbezogenen Steuern eines Handwerkergeräts (102), wobei der Token (100) aufweist:
einen Prozessor (106), der zum steuerungstechnischen Zusammenwirken mit dem Handwerkergerät (102) ausgebildet ist;
eine Identifizierungseinrichtung (170), die zum Identifizieren eines Benutzers des Token (100) ausgebildet ist; und
eine erste Speichereinrichtung (128) mit gespeicherten Informationen, die für ein personalisiertes Berechtigungsprofil des Benutzers in Bezug auf das Handwerkergerät (102) indikativ sind oder einen Zugang hierzu gewähren;
wobei der Prozessor (106) ausgebildet ist, bei Koppeln des Token (100) mit dem Handwerkergerät (102) eine Benutzung des Handwerkergeräts (102) durch den Benutzer basierend auf dem personalisierten Berechtigungsprofil zuzulassen, einzustellen und/oder zu unterbinden;
**dadurch gekennzeichnet dass**
das Handwerkergerät (102), das zum Koppeln mit dem Token (100) derart ausgebildet ist, dass eine Benutzung des mit dem Token (100) gekoppelten Handwerkergeräts (102) durch den Benutzer basierend auf dem personalisierten Berechtigungsprofil zugelassen, eingestellt und/oder unterbunden wird;
wobei das Handwerkergerät (102) eine zweite Speichereinrichtung (140) zum Speichern des Berechtigungsprofils aufweist, wobei die zweite Speichereinrichtung (140) mit dem Token (100) kommunizierfähig koppelbar ist, um das Berechtigungsprofil mittels des Token (100) in der zweiten Speichereinrichtung (140) zu speichern und/oder von der zweiten Speichereinrichtung (140) herunterzuladen.

2. Handwerkerausstattung (104)gemäß Anspruch 1, wobei das Berechtigungsprofil des Benutzers in der ersten Speichereinrichtung (128) gespeichert ist.

3. Handwerkerausstattung (104)gemäß Anspruch 1 oder 2, wobei der Token (100) eine Kommunikationseinrichtung (118) aufweist, die zum Kommunizieren mittels eines Kommunikationsnetzwerks (120) zum Erlangen des Berechtigungsprofils des mittels der Identifizierungseinrichtung (170) identifizierten Benutzers unter Verwendung der Zugang gewährenden Information ausgebildet ist.

4. Handwerkerausstattung (104)gemäß einem der Ansprüche 1 bis 3, wobei die Identifizierungseinrichtung (170) einen einen Benutzer identifizierenden Sensor (112) aufweist, insbesondere einen Fingerprintsensor oder einen Gesichtserken n u ngssensor.

5. Handwerkerausstattung (104)gemäß einem der Ansprüche 1 bis 4, wobei der Prozessor (106) ausgebildet ist, eine mittels der Identifizierungseinrichtung (170) ermittelte Benutzeridentität mit dem Berechtigungsprofil abzugleichen und basierend hierauf zu steuern, ob die Benutzung des Handwerkergeräts (102) durch den Benutzer zugelassen oder unterbunden und/oder wie die Benutzung eingestellt wird.

6. Handwerkerausstattung (104)gemäß einem der Ansprüche 1 bis 5, wobei das personalisierte Berechtigungsprofil zumindest eine Information aus einer Gruppe aufweist, die besteht aus einem auf eine Benutzerqualifikation und/oder auf ein körperliches oder biologisches Benutzermerkmal bezogenes Benutzungsverbot für mindestens einen definierten Betriebsmodus des Handwerkergeräts (102), einer benutzerspezifischen Benutzungserlaubnis für mindestens einen definierten Betriebsmodus des Handwerkergeräts (102), und einer arbeitsschutzbezogenen Benutzungsbedingung für die Benutzung des Handwerkergeräts (102).

7. Handwerkerausstattung (104)gemäß einem der Ansprüche 1 bis 6, wobei der Prozessor (106) ausgebildet ist, bei Koppeln mit dem Handwerkergerät (102) basierend auf dem personalisierten Berechtigungsprofil ein Herunterladen eines Datensatzes, insbesondere eines einen Betriebsablauf des Handwerkergeräts (102) definierenden Datensatzes, aus einem Kommunikationsnetzwerk (120) zuzulassen oder zu unterbinden.

8. Handwerkerausstattung (104)gemäß einem der Ansprüche 1 bis 7, wobei der Prozessor (106) ausgebildet ist, den Betrieb des mit dem Token (100) gekoppelten Handwerkergeräts (102) nur dann freizugeben, wenn eine mittels des Token (100) vorab durchgeführte Benutzeridentifizierung zu dem Ergebnis geführt hat, dass ein sich identifizierender Benutzer für den Betrieb des Handwerkergeräts (102) berechtigt ist.

9. Handwerkerausstattung (104)gemäß einem der Ansprüche 1 bis 8, wobei der Prozessor (106) ausgebildet ist, bei Koppeln mit unterschiedlichen Handwerkergeräten (102) eine Benutzung des Handwerkergeräts (102) durch den Benutzer basierend auf dem personalisierten Berechtigungsprofil in unterschiedlicher Weise zuzulassen, einzustellen und/oder zu unterbinden.

10. Handwerkerausstattung (104)gemäß einem der Ansprüche 1 bis 9,
aufweisend eine Detektionseinrichtung, insbesondere eine Kamera, die zum Detektieren einer für eine mittels des Handwerkergeräts (102) auszuführenden Bearbeitungsaufgabe indikativen Bearbeitungsinformation ausgebildet ist;
wobei der Prozessor (106) zum Ausführen der Bearbeitungsaufgabe unter Verwendung der detektierten Bearbeitungsinformation ausgebildet ist.

11. Handwerkerausstattung (104)gemäß einem der Ansprüche 1 bis 10, aufweisend eine mechanische Kopplungseinrichtung (110), die zum mechanischen Koppeln mit unterschiedlichen Handwerkergeräten (102) ausgebildet ist, wobei der Token (100) ausgebildet ist, bei mechanischem Koppeln der mechanischen Kopplungseinrichtung (110) mit einem Handwerkergerät (102) mittels des Prozessors (106) das besagte Handwerkergerät (102) zu steuern.

12. Handwerkerausstattung (104)gemäß Anspruch 11, aufweisend zumindest eines der folgenden Merkmale:
wobei die mechanische Kopplungseinrichtung (110) ausgebildet ist, den Token (100) von dem Handwerkergerät (102) abnehmbar zu koppeln;
wobei die mechanische Kopplungseinrichtung (110) eine elektromechanische Schnittstelle aufweist, insbesondere eine für unterschiedliche Handwerkergeräte (102) universelle elektromechanische Schnittstelle;
wobei der Token (100) ausgebildet ist, bei mechanischem Koppeln der mechanischen Kopplungseinrichtung (110) mit einem Handwerkergerät (102) eine Kommunikationsverbindung, insbesondere eine kontaktlose oder kontaktbehaftete Kommunikationsverbindung, mit dem Handwerkergerät (102) auszubilden.

13. Handwerkerausstattung (104) gemäß einem der Ansprüche 1 bis 12, aufweisend zumindest eines der folgenden Merkmale:
wobei das Handwerkergerät (102) als ein elektrisches Handgerät ausgebildet ist, insbesondere aus einer Gruppe, die besteht aus einer Bohrmaschine, einem Akkuschrauber, einem Akku-Bohrschrauber, einem Drehschrauber, einem Impulsschrauber, einem Ratschenschrauber, einem Schlagschrauber, insbesondere einem Akku-Schlagschrauber, einem Hammerbohrer, einem kabelgebundenen Handgerät und einem druckluftbetriebenen Handgerät;
aufweisend eine Mehrzahl von Handwerkergeräten (102), von denen zumindest einige zum Zusammenwirken mit dem Token (100) ausgebildet sind, wobei insbesondere die Handwerkergeräte (102) mindestens zwei unterschiedliche Elemente aus einer Gruppe ausweisen, die besteht aus einem elektrischen Handgerät, einem Werkzeug oder einem Werkzeugsatz, einem Bevorratungssystem, einem Verbrauchsgut, und einem Fahrzeug;
wobei der Prozessor (106) ausgebildet ist, eine Benutzung des Handwerkergeräts (102) durch den Benutzer erst dann zuzulassen, wenn ein Tragen einer für die Benutzung des Handwerkergeräts (102) vorgeschriebenen Arbeitsschutzeinrichtung durch den Benutzer verifiziert wurde, insbesondere mittels des Token (100) verifiziert wurde, wobei insbesondere der Prozessor (106) ausgebildet ist, die Arbeitsschutzeinrichtung sensorisch zu erkennen, insbesondere mittels einer Kamera des Token (100) und/oder des Handwerkergeräts (102) und/oder mittels Kommunizierens mit einer Kommunikationseinrichtung (118) oder einem Token (100) der Arbeitsschutzeinrichtung;
wobei ein Betrieb des Handwerkergeräts (102) ohne Kopplung mit dem Token (100) unterbunden ist.

14. Verfahren zum benutzerbezogenen Steuern des Handwerkergeräts (102) mittels eines Token (100) gemäß einem der Ansprüche 1 bis 13, wobei das Verfahren aufweist:
Identifizieren eines Benutzers des Token (100);
Auffinden eines personalisierten Berechtigungsprofils des Benutzers des Token (100); und
bei Koppeln des Token (100) mit dem Handwerkergerät (102), Zulassen, Einstellen und/oder Unterbinden einer Benutzung des Handwerkergeräts (102) durch den Benutzer basierend auf dem personalisierten Berechtigungsprofil.

## Claims

1. A craft equipment (104) comprising:
a token (100) for user-related control of a craft device (102), the token (100) comprising:
a processor (106) configured for control cooperation with the craft device (102);
an identification device (170) configured to identify a user of the token (100); and
a first storage device (128) having stored information indicative of or providing access to a personalized authorization profile of the user with respect to the craft device (102);
wherein the processor (106) is configured, upon coupling of the token (100) to the craft device (102), to permit, set and/or prohibit use of the craft device (102) by the user based on the personalized authorization profile;
**characterized by**
the craft device (102) configured for coupling to the token (100) such that use of the craft device (102) coupled to the token (100) by the user is permitted, set and/or prohibited based on the personalized authorization profile;
wherein the craft device (102) comprises a second storage device (140) for storing the authorization profile, wherein the second storage device (140) is communicably couplable to the token (100) in order to store the authorization profile in the second storage device (140) by means of the token (100) and/or to download the authorization profile from the second storage device (140).

2. The craft equipment (104) according to claim 1, wherein the authorization profile of the user is stored in the first storage device (128).

3. The craft equipment (104) according to claim 1 or 2, wherein the token (100) comprises a communication device (118) configured to communicate by means of a communication network (120) for obtaining the authorization profile of the user identified by means of the identification device (170) using the information granting the access.

4. The craft equipment (104) according to any one of claims 1 to 3, wherein the identification device (170) comprises a sensor (112) identifying a user, in particular a fingerprint sensor or a face recognition sensor.

5. The craft equipment (104) according to any one of claims 1 to 4, wherein the processor (106) is configured to compare a user identity determined by means of the identification device (170) with the authorization profile and to control based thereon whether the use of the craft device (102) by the user is permitted or prohibited and/or how the use is set.

6. The craft equipment (104) according to any one of claims 1 to 5, wherein the personalized authorization profile comprises at least one piece of information from a group consisting of a prohibition of use related to a user qualification and/or to a physical or biological user feature for at least one defined operating mode of the craft device (102), a user-specific use permission for at least one defined operating mode of the craft device (102), and a work protection-related use condition for the use of the craft device (102).

7. The craft equipment (104) according to any one of claims 1 to 6, wherein the processor (106) is configured, upon coupling to the craft device (102) based on the personalized authorization profile, to permit or prohibit downloading of a data set, in particular a data set defining an operating sequence of the craft device (102), from a communication network (120).

8. The craft equipment (104) according to any one of claims 1 to 7, wherein the processor (106) is configured to enable the operation of the craft device (102) coupled to the token (100) only if a user identification carried out in advance by means of the token (100) has led to the result that an identifying user is authorized for the operation of the craft device (102).

9. The craft equipment (104) according to any one of claims 1 to 8, wherein the processor (106) is configured, upon coupling to different craft devices (102), to permit, set and/or prohibit use of the craft device (102) by the user based on the personalized authorization profile in different ways.

10. The craft equipment (104) according to any one of claims 1 to 9,
comprising a detection device, in particular a camera, which is configured to detect processing information indicative of a processing task to be carried out by means of the craft device (102);
wherein the processor (106) is configured to execute the processing task using the detected processing information.

11. The craft equipment (104) according to any one of claims 1 to 10, comprising a mechanical coupling device (110) which is configured for mechanical coupling to different craft devices (102), wherein the token (100) is configured, upon mechanical coupling of the mechanical coupling device (110) to a craft device (102), to control said craft device (102) by means of the processor (106).

12. The craft equipment (104) according to claim 11, comprising at least one of the following features:
wherein the mechanical coupling device (110) is configured to couple the token (100) detachably from the craft device (102);
wherein the mechanical coupling device (110) comprises an electromechanical interface, in particular an electromechanical interface which is universal for different craft devices (102);
wherein the token (100) is configured, upon mechanical coupling of the mechanical coupling device (110) to a craft device (102), to form a communication connection, in particular a contactless or contact-type communication connection, with the craft device (102).

13. The craft equipment (104) according to any one of claims 1 to 12, comprising at least one of the following features:
wherein the craft device (102) is configured as an electric hand-held device, in particular from a group consisting of a drilling machine, a cordless screwdriver, a cordless drill screwdriver, a rotary screwdriver, a pulse screwdriver, a ratchet screwdriver, a percussion screwdriver, in particular a cordless percussion screwdriver, a hammer drill, a cable-bound hand-held device and a compressed air-operated hand-held device;
comprising a plurality of craft devices (102), at least some of which are configured for cooperation with the token (100), wherein in particular the craft devices (102) comprise at least two different elements from a group consisting of an electric hand-held device, a tool or a tool set, a storage system, a consumable good, and a vehicle;
wherein the processor (106) is configured to permit use of the craft device (102) by the user only when wearing of a work protection device prescribed for use of the craft device (102) has been verified by the user, in particular has been verified by means of the token (100), wherein in particular the processor (106) is configured to detect the work protection device by sensors, in particular by means of a camera of the token (100) and/or of the craft device (102) and/or by means of communicating with a communication device (118) or a token (100) of the work protection device;
wherein operation of the craft device (102) is prevented without coupling to the token (100).

14. A method for user-related control of the craft device (102) by means of a token (100) according to any one of claims 1 to 13, the method comprising:
identifying a user of the token (100);
finding a personalized authorization profile of the user of the token (100); and
upon coupling of the token (100) to the craft device (102), permitting, setting and/or prohibiting use of the craft device (102) by the user based on the personalized authorization profile.

## Revendications

1. Équipement d'outillage (104), présentant :
un jeton (100) permettant à un utilisateur de commander un appareil d'outillage (102), dans lequel le jeton (100) présente :
un processeur (106) conçu pour interagir de manière commandée avec l'appareil d'outillage (102),
un dispositif d'identification (170) conçu pour identifier un utilisateur du jeton (100) ; et
un premier dispositif de stockage (128) contenant des informations stockées indicatives d'un profil d'autorisation personnalisé de l'utilisateur par rapport à l'appareil d'outillage (102), ou accordant un accès à celles-ci ;
dans lequel le processeur (106) est conçu pour autoriser, régler et/ou interdire l'utilisation de l'appareil d'outillage (102) par l'utilisateur en fonction du profil d'autorisation personnalisé lors du couplage du jeton (100) avec l'appareil d'outillage (102) ;
**caractérisé en ce que**
l'appareil d'outillage (102) est conçu pour être couplé au jeton (100) de telle manière que l'utilisation, par l'utilisateur, de l'appareil d'outillage (102) couplé au jeton (100) est autorisée, réglée et/ou interdite en fonction du profil d'autorisation personnalisé ;
dans lequel l'appareil d'outillage (102) présente un deuxième dispositif de stockage (140) permettant de stocker le profil d'autorisation, dans lequel le deuxième dispositif de stockage (140) peut être couplé de manière à pouvoir communiquer avec le jeton (100) afin de stocker le profil d'autorisation dans le deuxième dispositif de stockage (140) au moyen du jeton (100) et/ou de le télécharger à partir du deuxième dispositif de stockage (140) .

2. Équipement d'outillage (104) selon la revendication 1, dans lequel le profil d'autorisation de l'utilisateur est stocké dans le premier dispositif de stockage (128).

3. Équipement d'outillage (104) selon la revendication 1 ou 2, dans lequel le jeton (100) présente un dispositif de communication (118) qui est conçu pour communiquer au moyen d'un réseau de communication (120) afin d'obtenir le profil d'autorisation de l'utilisateur identifié au moyen du dispositif d'identification (170) en utilisant les informations accordant l'accès.

4. Équipement d'outillage (104) selon l'une quelconque des revendications 1 à 3, dans lequel le dispositif d'identification (170) présente un capteur (112) identifiant un utilisateur, en particulier un capteur d'empreintes digitales ou un capteur de reconnaissance faciale.

5. Équipement d'outillage (104) selon l'une quelconque des revendications 1 à 4, dans lequel le processeur (106) est conçu pour comparer une identité d'utilisateur déterminée au moyen du dispositif d'identification (170) avec le profil d'autorisation et, en se basant sur ladite comparaison, commander l'autorisation ou l'interdiction de l'utilisation de l'appareil d'outillage (102) par l'utilisateur et/ou la manière de régler l'utilisation.

6. Équipement d'outillage (104) selon l'une quelconque des revendications 1 à 5, dans lequel le profil d'autorisation personnalisé présente au moins une information issue d'un groupe constitué d'une interdiction d'utilisation liée à une qualification d'utilisateur et/ou à une caractéristique d'utilisateur physique ou biologique pour au moins un mode de fonctionnement défini de l'appareil d'outillage (102), d'une autorisation d'utilisation spécifique à l'utilisateur pour au moins un mode de fonctionnement défini de l'appareil d'outillage (102), et d'une condition d'utilisation liée à la sécurité au travail pour l'utilisation de l'appareil d'outillage (102) .

7. Équipement d'outillage (104) selon l'une quelconque des revendications 1 à 6, dans lequel le processeur (106) est conçu pour, en se basant sur le profil d'autorisation personnalisé, autoriser ou interdire le téléchargement d'un ensemble de données, en particulier d'un ensemble de données définissant une séquence de fonctionnement de l'appareil d'outillage (102), à partir d'un réseau de communication (120) lors du couplage avec l'appareil d'outillage (102).

8. Équipement d'outillage (104) selon l'une quelconque des revendications 1 à 7, dans lequel le processeur (106) est conçu pour n'autoriser le fonctionnement de l'appareil d'outillage (102) couplé au jeton (100) que si une identification d'utilisateur effectuée à l'avance au moyen du jeton (100) a conduit à la conclusion que l'utilisateur en train de s'identifier est autorisé à faire fonctionner l'appareil d'outillage (102).

9. Équipement d'outillage (104) selon l'une quelconque des revendications 1 à 8, dans lequel le processeur (106) est conçu pour autoriser, régler et/ou interdire de différentes manières l'utilisation de l'appareil d'outillage (102) par l'utilisateur en cas de couplage avec différents appareils d'outillage (102) en se basant sur le profil d'autorisation personnalisé.

10. Équipement d'outillage (104) selon l'une quelconque des revendications 1 à 9,
présentant un dispositif de détection, en particulier une caméra, qui est conçu pour détecter une information de traitement indicative pour une tâche de traitement à effectuer au moyen de l'appareil d'outillage (102) ;
dans lequel le processeur (106) est conçu pour exécuter la tâche de traitement en utilisant les informations de traitement détectées.

11. Équipement d'outillage (104) selon l'une quelconque des revendications 1 à 10, présentant un dispositif de couplage mécanique (110) qui est conçu pour un couplage mécanique avec différents appareils d'outillage (102), dans lequel le jeton (100) est conçu pour commander ledit appareil d'outillage (102) au moyen du processeur (106) lors du couplage mécanique du dispositif de couplage mécanique (110) avec un appareil d'outillage (102).

12. Équipement d'outillage (104) selon la revendication 11, présentant au moins une des caractéristiques ci-dessous :
le dispositif de couplage mécanique (110) est conçu pour coupler le jeton (100) de manière à pouvoir le retirer de l'appareil d'outillage (102).
le dispositif de couplage mécanique (110) présente une interface électromécanique, en particulier une interface électromécanique universelle destinée à différents appareils d'outillage (102).
le jeton (100) est conçu pour former une liaison de communication, en particulier une liaison de communication sans contact ou avec contact, avec l'appareil d'outillage (102) lors du couplage mécanique du dispositif de couplage mécanique (110) avec un appareil d'outillage (102) ;

13. Équipement d'outillage (104) selon l'une quelconque des revendications 1 à 12, présentant au moins une des caractéristiques ci-dessous :
l'appareil d'outillage (102) est réalisé sous la forme d'un appareil à main électrique, en particulier issu d'un groupe constitué d'une perceuse, d'une visseuse sans fil, d'une perceuse-visseuse sans fil, d'une visseuse électrique, d'une visseuse à impulsions, d'une visseuse à cliquet, d'une visseuse à chocs, en particulier d'une visseuse à chocs sans fil, d'une perceuse à percussion, d'un appareil d'outillage câblé et d'un appareil d'outillage pneumatique ;
présentant une pluralité d'appareils d'outillage (102), dont au moins certains sont conçus pour interagir avec le jeton (100), dans lequel les appareils d'outillage (102) présentent en particulier au moins deux éléments différents issus d'un groupe constitué d'un appareil manuel électrique, d'un outil ou d'un ensemble d'outils, d'un système de stockage, d'un produit de consommation, et d'un véhicule ;
dans lequel le processeur (106) est conçu pour autoriser l'utilisateur à utiliser l'appareil d'outillage (102) uniquement lorsque le port d'un dispositif de protection du travail prescrit pour l'utilisation de l'appareil d'outillage (102) a été vérifié par l'utilisateur, en particulier au moyen du jeton (100), dans lequel le processeur (106) est en particulier conçu pour reconnaître le dispositif de protection du travail par détection, en particulier au moyen d'une caméra du jeton (100) et/ou de l'appareil d'outillage (102) et/ou au moyen d'une communication avec un dispositif de communication (118) ou un jeton (100) du dispositif de protection du travail ;
dans lequel un fonctionnement de l'appareil d'outillage (102) sans couplage avec le jeton (100) est interdit.

14. Procédé de commande d'un appareil d'outillage (102) en fonction d'un utilisateur au moyen d'un jeton (100) selon l'une quelconque des revendications 1 à 13, dans lequel le procédé comprend les étapes consistant à :
identifier un utilisateur du jeton (100) ;
trouver un profil d'autorisation personnalisé de l'utilisateur du jeton (100) ; et
lors du couplage du jeton (100) avec l'appareil d'outillage (102), autoriser, régler et/ou interdire l'utilisation de l'appareil d'outillage (102) par l'utilisateur en se basant sur le profil d'autorisation personnalisé.
